(19) **Europäisches Patentamt / European Patent Office / Office européen des brevets**

(11) **EP 4 178 214 A1**

(12) **EUROPEAN PATENT APPLICATION**
published in accordance with Art. 153(4) EPC

(43) Date of publication:
**10.05.2023 Bulletin 2023/19**

(21) Application number: **21853780.1**

(22) Date of filing: **04.08.2021**

(51) International Patent Classification (IPC):
**H04N 21/436** (2011.01)      **H04N 21/4363** (2011.01)
**H04N 21/414** (2011.01)      **H04N 21/4402** (2011.01)
**H04N 21/443** (2011.01)

(52) Cooperative Patent Classification (CPC):
**G06F 3/1454; G09G 5/003; G09G 5/14;**
**H04N 21/414; H04N 21/436; H04N 21/4363;**
**H04N 21/4402; H04N 21/443;** G09G 2370/22

(86) International application number:
**PCT/KR2021/010263**

(87) International publication number:
**WO 2022/031029 (10.02.2022 Gazette 2022/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **04.08.2020  KR 20200097391**

(71) Applicant: **Samsung Electronics Co., Ltd.**
**Gyeonggi-do 16677 (KR)**

(72) Inventors:
• **LEE, Kyungryol**
  **Suwon-si, Gyeonggi-do 16677 (KR)**
• **KWON, Soeun**
  **Suwon-si, Gyeonggi-do 16677 (KR)**
• **KIM, Younghyun**
  **Suwon-si, Gyeonggi-do 16677 (KR)**
• **KIM, Juyoung**
  **Suwon-si, Gyeonggi-do 16677 (KR)**
• **KIM, Hakjoo**
  **Suwon-si, Gyeonggi-do 16677 (KR)**
• **PARK, Sangho**
  **Suwon-si, Gyeonggi-do 16677 (KR)**
• **SEO, Woonyong**
  **Suwon-si, Gyeonggi-do 16677 (KR)**
• **LEE, Gwiho**
  **Suwon-si, Gyeonggi-do 16677 (KR)**
• **JWA, Hodong**
  **Suwon-si, Gyeonggi-do 16677 (KR)**
• **CHOI, Areum**
  **Suwon-si, Gyeonggi-do 16677 (KR)**

(74) Representative: **Arnold & Siedsma**
**Bezuidenhoutseweg 57**
**2594 AC The Hague (NL)**

(54) **ELECTRONIC DEVICE AND METHOD, PERFORMED BY ELECTRONIC DEVICE, FOR PROVIDING APPLICATION SCREEN ON EXTERNAL DEVICE DISPLAY**

(57)     An electronic device according to various embodiments may include a display, a communication interface, a memory, and a processor operatively connected to the display, the communication interface, and the memory, wherein the processor is configured to determine a connection to an external device via the communication interface, to receive a request for executing a first task from the external device, to execute the first task on the basis of an application stored in the memory in response to the request for executing the first task, generate a first virtual display including an execution screen of the first task, and transmit the first virtual display to the external device, to receive, during the execution of the first task, a request for executing a second task from the external device, and to execute the second task on the basis of an application stored in the memory in response to the request for executing the second task, generate a second virtual display including an execution screen of the second task, and transmit the second virtual display to the external device.

EP 4 178 214 A1

**(Cont. next page)**

FIG. 15

START

GENERATE NEW App Execution Container — 1510

EXECUTE APP OR INTERCEPTED INTENT IN CONTAINER — 1515

CHECK OnStartActivity intercepted CONDITION — 1520

CONDITION NOT SATISFIED

CONDITION SATISFIED

CALL OnStartActivityintercepted CALLBACK — 1525

EXECUTE APP — 1565

IDENTIFY POSITION OF RUNNING APP — 1530

CALL OnTaskPlayed CALLBACK — 1570

Virtual Display

Main Display

BRING RUNNING APP TO FOREGROUND — 1535

DISPLAY USER DETERMINATION DIALOGUE — 1545

IDENTIFY NUMBER OF RUNNING CONTAINERS — 1575

Cnt < N

Cnt > N

TERMINATE NEWLY GENERATED AppExecutionContainer — 1540

NO

USER ALLOWED TO MOVE APP? — 1550

EXTRACT CONTAINER TO BE TERMINATED — 1580

YES

TERMINATE APP RUNNING IN MAIN DISPLAY — 1555

TERMINATE SELECTED TECONTAINER — 1585

EXECUTE INTERCEPTED INTENT IN NEW VD — 1560

END

## Description

**[Technical Field]**

The document relates to an electronic device and, for example, to a method by which an electronic device is able to provide an application screen on a display of an external device by executing an application.

**[Background Art]**

With the development of wireless communication technology and processor technology, a portable electronic device (hereinafter, an electronic device) represented by a smartphone is equipped with various functions in addition to a call function. For example, an electronic device may provide an application screen via a display of the electronic device by executing various applications.

An electronic device may have a relatively small size display in order to be portable by a user. Accordingly, the electronic device may have a mirroring function of transmitting an application screen executed in the electronic device to an external device having a larger display so as to provide the application screen on the display of the external device. In addition to simply transmitting the execution screen of the application to the display of the external device, a user interface for the application of the electronic device is provided in a personal computer (PC) environment, and a service for controlling an operation, such as application execution of the electronic device, by a user input in the PC environment is also being developed.

**[Disclosure of Invention]**

**[Technical Problem]**

Conventional screen sharing services may allow display of a screen being displayed on an electronic device, as it is, on a display of an external device or may provide an application screen of the electronic device on one window provided by the external device.

Various embodiments of the document are to provide multiple task or application screens executed in an electronic device concurrently on a display of an external device.

**[Solution to Problem]**

An electronic device according to various embodiments may include a display, a communication interface, a memory, and a processor operatively connected to the display, the communication interface, and the memory, wherein the processor is configured to determine a connection to an external device via the communication interface, to receive a request for executing a first task from the external device, to execute the first task on the basis of an application stored in the memory in response to the request for executing the first task, generate a first virtual display including an execution screen of the first task, and transmit the first virtual display to the external device, to receive, during the execution of the first task, a request for executing a second task from the external device, and to execute the second task on the basis of an application stored in the memory in response to the request for executing the second task, generate a second virtual display including an execution screen of the second task, and transmit the second virtual display to the external device.

A method for providing a screen on a display of an external device by an electronic device according to various embodiments may include an operation of determining a connection to the external device, an operation of receiving a request for executing a first task from the external device, an operation of executing the first task on the basis of an application stored in a memory in response to the request for executing the first task, generating a first virtual display including an execution screen of the first task, and transmitting the first virtual display to the external device, an operation of receiving, during the execution of the first task, a request for executing a second task from the external device, and an operation of executing the second task on the basis of an application stored in the memory in response to the request for executing the second task, generating a second virtual display including an execution screen of the second task, and transmitting the second virtual display to the external device.

An electronic device according to various embodiments may include a display, a communication interface, and a processor operatively connected to the display and the communication interface, wherein the processor is configured to determine a connection to an external device via the communication interface, to transmit, in response to a first user input for execution of a first task executable in the external device, a request for executing the first task to the external device, to receive a first virtual display including an execution screen of the first task from the external device, to transmit, in response to a second user input for execution of a second task executable in the external device, a request for executing the second task to the external device, to receive a second virtual display including an execution screen of the second task from the external device, and to display the first virtual display and the second virtual display on different windows on the display.

**[Advantageous Effects of Invention]**

According to various embodiments of the document, multiple tasks or application screens executed in an electronic device can be concurrently provided on a display of an external device.

Various embodiments of the document can provide a method for generating and controlling a screen, managing an executed application, processing a user input, and/or managing a resource of an electronic device, in order to provide multiple task or application screens on an external device.

In addition, various technical effects identified directly or indirectly via this document can be provided.

**[Brief Description of Drawings]**

FIG. 1 is a block diagram of an electronic device in a network environment according to various embodiments;
FIG. 2 illustrates an example of a first electronic device and a second electronic device according to various embodiments;
FIG. 3A and FIG. 3B illustrate elements of a first electronic device and a second electronic device, which are used to generate a virtual display during screen sharing, according to various embodiments;
FIG. 4 is a block diagram of a first electronic device according to various embodiments;
FIG. 5 is a block diagram of a second electronic device according to various embodiments;
FIG. 6 is a block diagram of a first electronic device for providing a screen sharing service according to various embodiments;
FIG. 7 is a block diagram of a second electronic device for providing a screen sharing service according to various embodiments;
FIG. 8 illustrates examples of containers configured in a first electronic device and a second electronic device according to various embodiments;
FIG. 9 is a flowchart of a method for providing a screen sharing service by a first electronic device and a second electronic device according to various embodiments;
FIG. 10 is a flowchart of a method for processing an event and a user input by a first electronic device and a second electronic device according to various embodiments;
FIG. 11 is a flowchart of a method performed by a first electronic device and a second electronic device when an application is terminated, according to various embodiments;
FIG. 12A and FIG. 12B illustrate screens provided on a display of a second electronic device according to various embodiments;
FIG. 13 is a flowchart of a method for processing an execution screen by a first electronic device when a new task is executed during a screen sharing service, according to various embodiments;
FIG. 14A and FIG. 14B illustrate screens provided by a first electronic device and a second electronic device when a new task is executed, according to various embodiments;
FIG. 15 is a flowchart of a method for processing a task on a new virtual display by a first electronic device according to various embodiments; and
FIG. 16 is a flowchart of a method for, when a task immediately terminated after launching is executed, processing the task by a first electronic device according to various embodiments.

**[Mode for the Invention]**

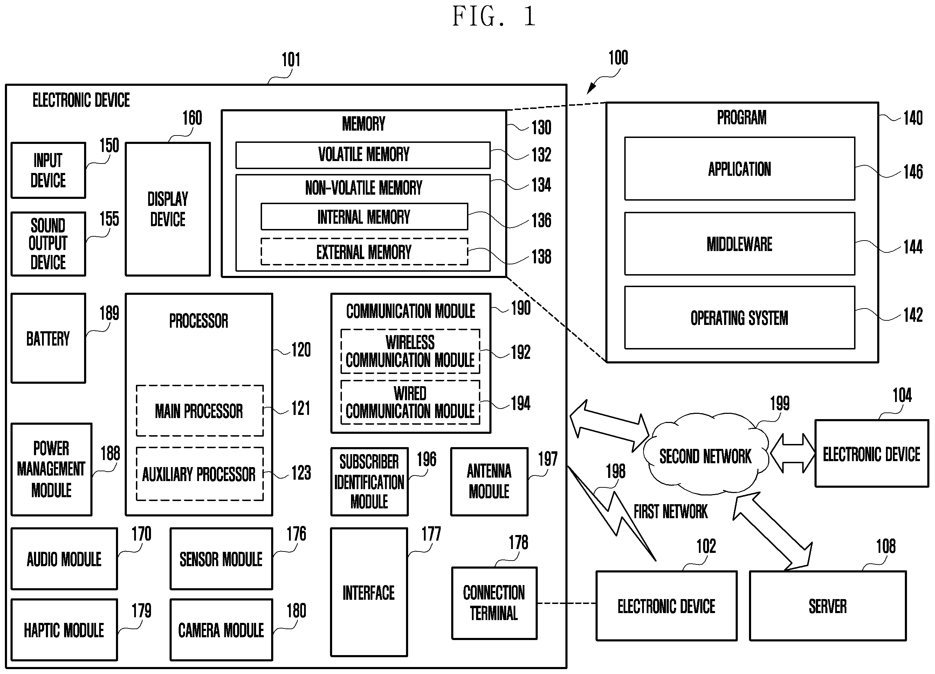

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

Hereinafter, in the document, a device that executes an application and transmits an application screen is defined as a first electronic device or a source device, and a device that receives an application screen and outputs the same on its own display or a connected another display device is defined as a second electronic device or a sink device. According to an actual implementation form, an identical device may operate as a first electronic device or a second electronic device in the document.

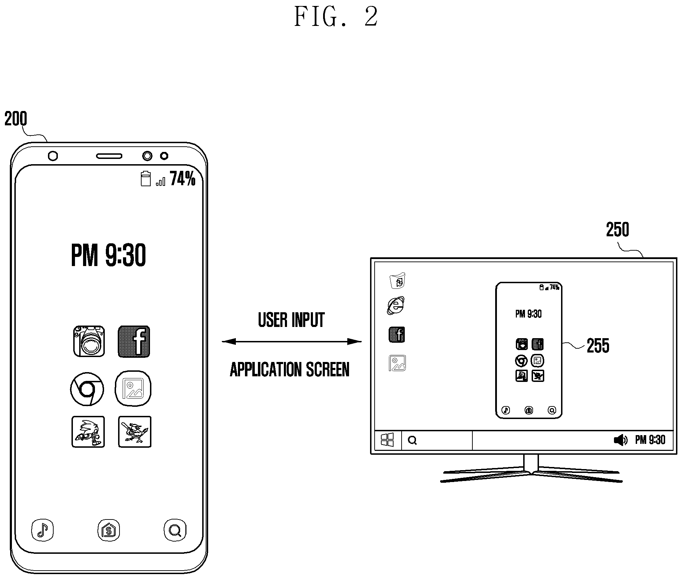

FIG. 2 illustrates an example of a first electronic device and a second electronic device according to various embodiments.

In various embodiments of the document, a first electronic device 200 (e.g., the electronic device 101 of FIG. 1) may be implemented as a portable electronic device, such as a smartphone or a tablet PC, and a second electronic device 250 may be implemented as a computing device, such as a desktop PC or a laptop PC.

According to various embodiments, the first electronic device 200 may store an application in a memory and execute the application. For example, the first electronic device 200 may execute various applications, such as Internet browser, Gallery, Messages, and Games, and may provide an execution screen of the application on a display of the first electronic device 200.

According to various embodiments, the second electronic device 250 may execute an application via a processor, a memory, and an operating system which are independent of the first electronic device 200. The second electronic device 250 may output an application screen via a separate display (e.g., a monitor) like in a desktop PC, or may be provided integrally with a display like in a laptop PC.

According to various embodiments, the first electronic device 200 and the second electronic device 250 may be connected to each other via wired or wireless communication. For example, the first electronic device 200 and the second electronic device 250 may be connected to each other via a wired interface, such as a high-definition multimedia interface (HDMI) or a universal serial bus (USB), and may be connected to each other via a short-range wireless communication network, such as Wi-Fi direct or Bluetooth.

According to various embodiments, if the first electronic device 200 and the second electronic device 250 are connected via wired or wireless communication, a screen sharing service may be provided. The screen sharing service described in the document may be a service or a function of a scheme in which an application of the first electronic device 200 is executed in the first electronic device 200, wherein the second electronic device 250 displays the application of the first electronic device 200 on a display of the second electronic device 250 by using a virtualization technology, and provides a user input for the application to the first electronic device 200. For example, the screen sharing service may be a service or function that allows an application of a portable electronic device, such as desktop experience (DeX) and MS Link to Windows, to be used in a PC environment.

According to various embodiments, if the first electronic device 200 and the second electronic device 250 are connected via a wired or wireless interface, the first electronic device 200 may transmit an application execution screen generated by the processor and the memory of the first electronic device 200 to the second electronic device 250. The second electronic device 250 may display an application execution screen 255 received from the first electronic device 200 and may transmit a user input for the application to the first electronic device 200. For example, when the first electronic device 200 and the second electronic device 250 are connected, the second electronic device 250 may execute an application for the screen sharing service and may receive application list information from the first electronic device 200 so as to display icons corresponding to applications of the first electronic device 200 on the display (or a display connected to the second electronic device 250) of the second electronic device 250. The second electronic device 250 may transmit a user input for an icon to the first electronic device 200, and the first electronic device 200 may execute a corresponding application according to the user input so as to transmit an application execution screen to the second electronic device 250. While the application screen 255 is being displayed on the display of the second electronic device 250, the second electronic device 250 may transmit the user input on a window that provides the application screen to the first electronic device 200 in real time, and the first electronic device 200 may control the application on the basis of the received user input.

According to various embodiments, if multiple applications or tasks are executed in the first electronic device 200, an execution screen of each application or task may be provided via a separate window on the display of the second electronic device 250.

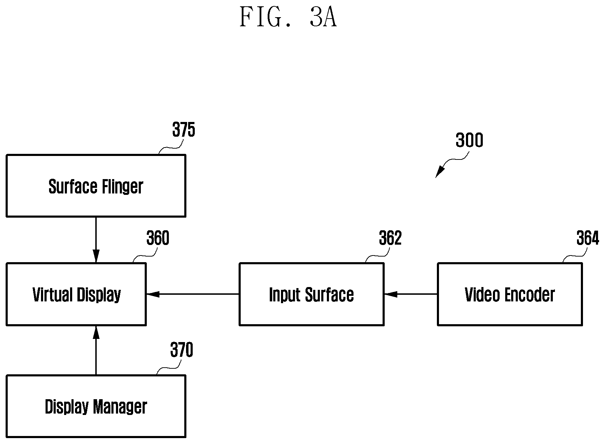

FIG. 3A illustrates elements of a first electronic device, which are used to generate a virtual display during screen sharing according to various embodiments.

According to various embodiments, a first electronic device 300 may configure a virtual display 360 (virtual display) to transmit a screen generated by an application to a second electronic device 350. Referring to FIG. 3A, the first electronic device 300 may include, as software components for configuring the virtual display 360, a surface flinger 375, a video encoder 364, an input surface 362, and a display manager 370.

According to various embodiments, the display manager 370 may serve to configure data generated by an application for a screen sharing service into the virtual display 360. The virtual display 360 is a virtual display device and may have one surface, and screen information may be drawn on the surface. The video encoder 364 may compress data generated by an application in order to increase transmission efficiency.

According to various embodiments, when the screen sharing service is started, the display manager 370 may generate the virtual display 360. The display manager 370 may generate the video encoder 364 and may designate the input surface 362 of the video encoder 364 as the surface of the virtual display 360. Here, the surface of the virtual display 360 is the input surface 362 of the video encoder 364, so that if a content on this surface is updated, this data may be compressed into a video form and output through an output buffer. The first electronic device 300 may transmit the data video-encoded as described above to the second electronic device 350.

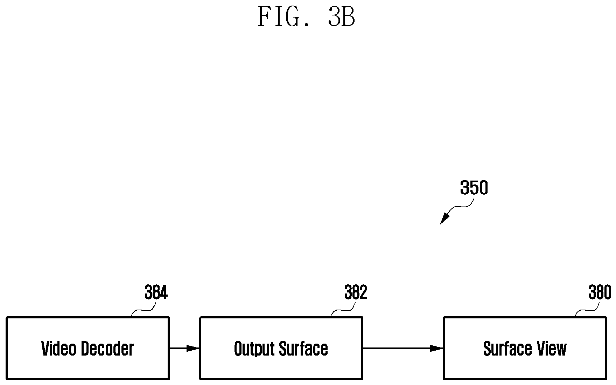

FIG. 3B illustrates elements of the second electronic device, which are used to receive and output a virtual display during screen sharing, according to various embodiments.

Referring to FIG. 3A, the second electronic device 350 may include, as software components used to output the virtual display 360 received from the first electronic device 300, a surface view 380, a video decoder 384, and an output surface 382.

According to various embodiments, when screen sharing data is transmitted from the first electronic device 300, the second electronic device 350 may generate the surface view 380 for content reproduction. Data transmitted from the first electronic device 300 is compressed data so that the second electronic device 350 may generate the video decoder 384 to change the data back to original data and may acquire the output surface 382 from the video decoder 384.

When the data transmitted from the first electronic device 300 is input to an input buffer of the video decoder 384, screen data may be drawn on the surface view 380 via a configured pipeline, and accordingly, the application screen transmitted from the first electronic device 300 may be output on the second electronic device 350.

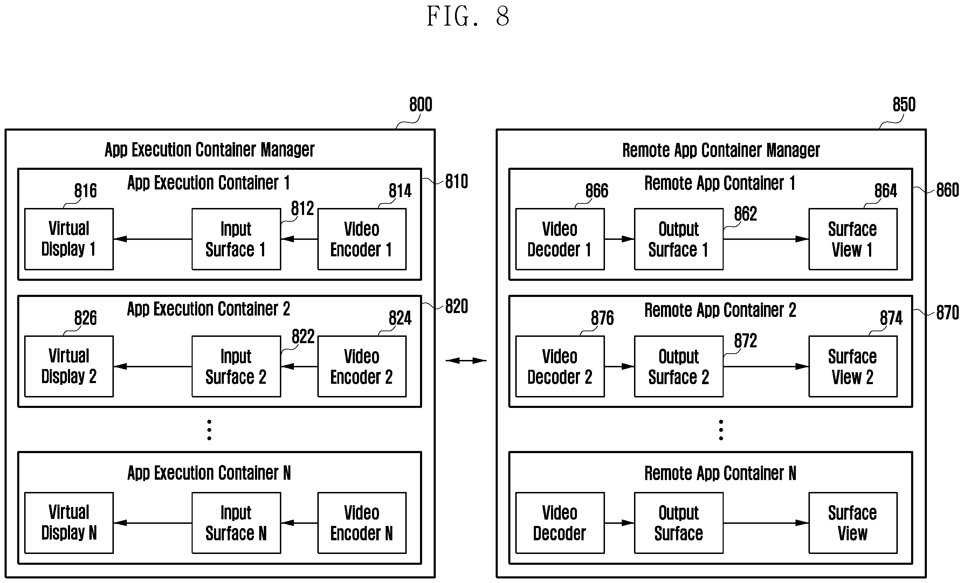

According to various embodiments, in order to independently provide execution screens of multiple applications and tasks, the first electronic device 300 may configure, as one container, the video encoder 364, the input surface 362, and the virtual display 360 which are for configuring the virtual display 360 generated by each application or task. In response thereto, the second electronic device 350 may configure, as one container, the video decoder 384, the output surface 382, and the surface view 380. Features of configuring an independent container for each application or task in the first electronic device 300 and the second electronic device 350 will be described in more detail with reference to FIG. 8.

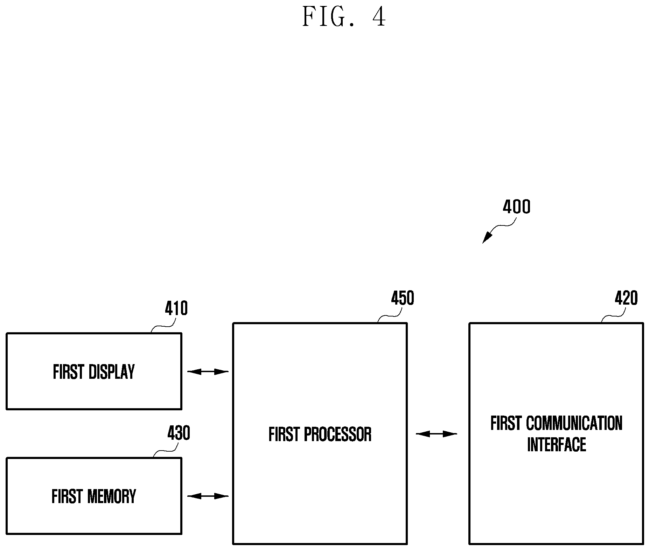

FIG. 4 is a block diagram of a first electronic device according to various embodiments.

Referring to FIG. 4, a first electronic device 400 (e.g., the first electronic device 200 of FIG. 2) may include a first display 410, a first communication interface 420, a first memory 430, and a first processor 450, and may implement various embodiments of the document even if at least some of the illustrated elements are omitted and/or substituted. The first electronic device 400 may further include at least some of the elements and/or functions of the electronic device 101 of FIG. 1.

Some (e.g., the first processor 450, the memory 430, and the first communication interface 420) of the elements illustrated in FIG. 4 and/or other elements of the first electronic device 400, which are not illustrated, may be disposed inside a housing (not shown) of the first electronic device 400, and at least a part of some elements (e.g., the first display 410 and the first communication interface 420) may be exposed to the outside of the housing.

According to various embodiments, the first display 410 displays an image, and may be implemented as one of a liquid crystal display (LCD), a light-emitting diode (LED) display, an organic light-emitting diode (OLED) display, a micro electro mechanical system (MEMS) display, or an electronic paper display 310, but is not limited thereto. According to various embodiments, the first display 410 may be a foldable display (e.g., an in-foldable display or an out-foldable display) at least a part of which can be folded, or may be a rollable display at least a part of which can be rolled. Alternatively, the first electronic device 400 may include two or more displays independent of each other. The first display 410 may include at least some of the elements and/or functions of the display module 160 of FIG. 1.

According to various embodiments, the first communication interface 420 may support a wired or wireless communication connection to an external device (e.g., the second electronic device 250 of FIG. 2), and the first electronic device 400 may include only one of a wired communication interface or a wireless communication interface.

For example, the first communication interface 420 is an example of a wired communication interface (e.g., the interface 177 of FIG. 1), and may include a high-definition multimedia interface (HDMI) and a universal serial bus (USB) interface. The first communication interface 420 may include a wireless communication module (e.g., the wireless communication module 192 of FIG. 1) supporting a short-range communication module with an external device. The wireless communication module may support various short-range wireless communication schemes (e.g., Wi-Fi, Bluetooth, and Bluetooth low energy (BLE)) and may include independent hardware and/or software elements to support each wireless communication scheme.

According to various embodiments, the first memory 430 is for temporarily or permanently storing non-limited digital data, and may include at least one of the elements and/or functions of the memory 130 of FIG. 1. The first memory 430 may include a non-volatile memory, such as a one-time programmable ROM (OTPROM), a programmable ROM (PROM), an erasable and programmable ROM (EPROM), an electrically erasable and programmable ROM (EEPROM), a mask ROM, a flash ROM, a flash memory (e.g., NAND flash or NOR flash), a hard drive, or a solid-state drive (SSD), and a volatile memory, such as a dynamic RAM (DRAM), a static RAM (SRAM), or a synchronous dynamic RAM (SDRAM).

The first memory 430 may store various instructions that may be executed by the first processor 450. The instructions may include various control commands including arithmetic and logical operations, data movement, and/or input/output which are recognizable by the first processor 450.

According to various embodiments, the first processor 450 is an element (e.g., an application processor) capable of performing an operation or data processing related to control and/or communication of each element of the first electronic device 400, and may thus include at least some of the elements and/or functions of the processor 120 of FIG. 1. The first processor 450 may be operatively, functionally, and/or electrically connected to each element of the first electronic device 400, which includes the first display 410, the first communication interface 420, and the first memory 430.

According to various embodiments, although there will be no limitations on arithmetic and data processing functions that the first processor 450 is able to implement on the first electronic device 400, the document provides descriptions of various embodiments related to generation and controlling of execution screens of multiple applications or tasks, management of the executed applications, processing of a user input, and management of resources of the first electronic device 400 in a screen sharing service. An operation of the first processor 450, which will be described later, may be performed by executing instructions stored in the first memory 430.

According to various embodiments, if connected to the second electronic device via the first communication interface 420, the first processor 450 may transmit a list of applications installed in the first electronic device 400 to the second electronic device.

According to various embodiments, the first processor 450 may receive a request for executing a first task from the second electronic device via the first communication interface 420. For example, the second electronic device may display an icon corresponding to each application on the display of the second electronic device on the basis of the received application list, and may transmit, to the first electronic device 400, a request for executing a corresponding application or task according to a user input for an icon.

According to various embodiments, the first processor 450 may execute the first task on the basis of an application stored in the memory in response to the execution request.

According to various embodiments, the first processor 450 may generate a first virtual display including an execution screen of the first task. The first processor 450 may configure, as a first container (e.g., an app execution container), a first encoder that compresses first image information generated in the first task, a first input surface that records the first image information, and the first virtual display. Here, the container refers to an object (or class or instance) on a program that manages each virtual display, and may be defined by a different name. For example, the first container and a second container may be defined by different names, so that the former may be defined by a first virtual display management group, and the latter may be defined by a second virtual display management group, and the like.

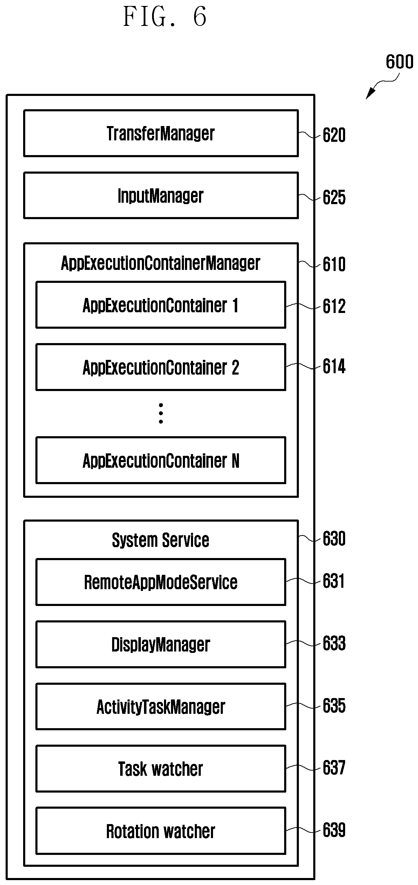

According to various embodiments, the first processor 450 may generate a video encoder in response to the request for executing the first task, and may designate an input surface of the video encoder as a surface of the first virtual display. The first processor 450 may manage, as a container, components (e.g., a virtual display, an input surface, and a video encoder) that execute tasks or applications to be executed, and may generate a separate container for each application or task. Each container may have an ID and may be mapped to a container of the second electronic device via the ID. Each container may further include at least some of an ID, a display ID, an application package name, display-related information, a task ID, task termination cause information, and time stamp information. The container configured by the first processor 450 will be described in more detail with reference to FIG. 6.

According to various embodiments, the first electronic device 400 and the second electronic device may configure independent containers in units of tasks or applications.

According to various embodiments, the first electronic device 400 and the second electronic device may configure corresponding containers, respectively. For example, if app execution container 1 is generated according to execution of a task (or application) in the first electronic device 400, and related information is transmitted to the second electronic device, the second electronic device may generate corresponding remote app container 1. Thereafter, if app execution container 2 is generated according to execution of a new task (or application) in the second electronic device, the second electronic device may generate corresponding remote app container 2. According to various embodiments, containers corresponding to each other may form one mirroring session which may be independent of a mirroring session formed between other containers. For example, a mirroring session, which is formed between app execution container 1 and remote app container 1, and a mirroring session, which is formed between app execution container 2 and remote app container 2, may be independent of each other. The first electronic device and the second electronic device may classify each mirroring session according to an ID of a container or a virtual display.

According to various embodiments, mirroring sessions formed between corresponding containers may be connected via mutually independent communication channels. For example, if the first electronic device 400 and the second electronic device are connected via a USB interface, mirroring sessions formed by respective containers may communicate via mutually independent USB channels (logical channels), and if the first electronic device 400 and the second electronic device are connected via Wi-Fi (or WFD), respective mirroring sessions may communicate by forming mutually independent Wi-Fi channels.

According to various embodiments, the generated first virtual display may be transmitted to an external device. For example, the first container including the first virtual display may be transmitted to the external device. The second electronic device may generate a container corresponding to the first container to receive a virtual display, and the container of the first electronic device 400 and the corresponding container of the second electronic device may configure a mirroring session.

According to various embodiments, the first processor 450 may receive a request for executing a second task from the external device while the first task is being executed. Here, the second task may be the same application as the application of the first task or a task executed by a different application.

According to various embodiments, in response to the request for executing the second task, the first processor 450 may execute the second task and generate a second virtual display including an execution screen of the second task. For example, the first processor 450 may configure, as a second container, components constituting the second virtual display. The second container may have the same configuration as that of the first container.

According to various embodiments, if an input event for the virtual display is received from the second electronic device, the first processor 450 may process the input event in the mapped first task or second task by using identification information included in the received input event. For example, if a user input (e.g., a mouse click or a touch input) occurs on the first virtual display in the second electronic device, the second electronic device may transmit input event information and an ID of the first virtual display (or an ID of the container) to the first electronic device 400. The first processor 450 may identify a virtual display mapped to the received ID, and may transfer the input event to an application configuring the corresponding virtual display.

According to various embodiments, upon reception of an intent for execution of a third task on the first virtual display, the first processor 450 may be configured to identify a virtual display corresponding to the third task. If no virtual display corresponding to the third task is generated, the first processor 450 may generate a third virtual display including an execution screen of the third task and transmit the third virtual display to the external device. If a virtual display corresponding to the third task is generated, the first processor 450 may cause the third task to operate in the foreground.

According to various embodiments, the first processor 450 may be configured, when the execution screen of the third task is displayed on the first display 410, to stop displaying of the execution screen of the third task on the first display 410, generate a third virtual display including the execution screen of the third task, and transmit the same to the external device, or to transmit the execution screen of the third task, which is being displayed on the first display 410, to the external device.

In this case, the first processor 450 may display a dialogue for determination of whether to move an execution position of the currently running task to the display of the second electronic device. If a user permits movement of the execution position of the task on the dialogue, the first processor 450 may terminate an application running on the first display 410 and may execute the third task on the newly generated third virtual display.

According to various embodiments, upon reception of a request for executing a new task from the external device, the first processor 450 may identify the number of currently generated virtual displays, and may terminate at least one of the generated virtual displays if the number of the virtual displays exceeds a maximum number. The first processor 450 may terminate an oldest generated virtual display (or container) or an oldest deactivated virtual display (or container).

According to an embodiment, the maximum number of concurrently executable virtual displays may be assigned in advance according to the processor and/or memory included in the first electronic device 400. For example, the maximum number of virtual displays may be determined to be a predefined number for each chip set (e.g., the first processor 450 and/or the first memory 430) of the electronic device. For example, the maximum number of virtual displays may be determined to be a number defined for each type (e.g., a processor name, identification (ID), and/or clock) of the first processor 450 and/or a size of the first memory 430.

According to an embodiment, the first processor 450 may determine the maximum number of virtual displays, based on available resources of the first processor 450 and/or the first memory 430. The available resources may be determined according to a size (or area) of an encoder resource allocated to the first processor 450 and/or the first memory 430 and a size of a resource required for transmission of the current virtual display. For example, the first processor 450 may determine, as the maximum number of virtual displays, a value obtained by dividing an area of an encoder surface, which may be implemented on the first memory 430, by a maximum resolution provided for a virtual display.

According to an embodiment, the first processor 450 may sense temperature of the first electronic device 400 and may determine the maximum number of virtual displays according to the sensed temperature. For example, the first electronic device 400 may measure temperature of one or more regions inside the first electronic device 400 via an element such as a thermistor, and may determine the maximum number of virtual displays according to a measured temperature section.

According to an embodiment, the first processor 450 may determine the maximum number of virtual displays, based on a transmission rate of data transmitted to a second external device via the first communication interface 420. For example, the first processor 450 may determine the maximum number of virtual displays according to a section of an average data transfer rate.

According to various embodiments, when a specific task is terminated, the first processor 450 may transmit task termination cause information (e.g., terminated because it has been executed for a long time, or terminated due to execution of a new task) to the second electronic device. Upon reception of the task termination cause information, the second electronic device may close a corresponding container in response thereto, and may remove a window that displays a virtual display of the corresponding container on the display.

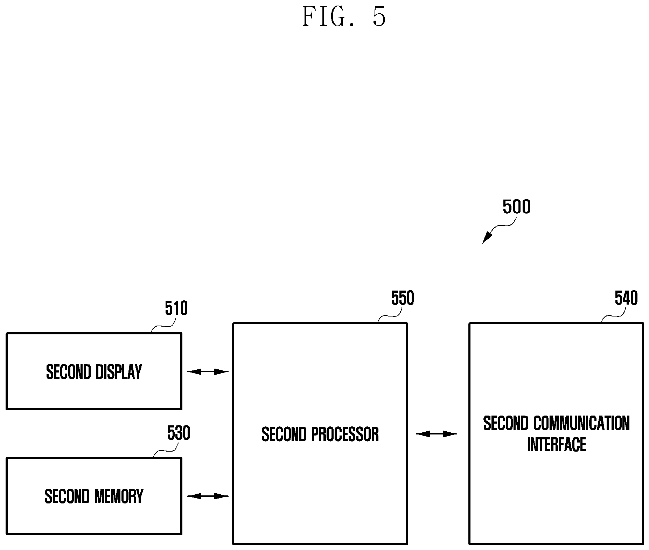

FIG. 5 is a block diagram of a second electronic device according to various embodiments.

Referring to FIG. 5, a second electronic device 500 (e.g., the second electronic device 500 of FIG. 2) may include a second display 510, a second communication interface 540, a second memory 530, and a second processor 550, and may implement various embodiments of the document even if at least some of the illustrated elements are omitted and/or substituted. According to an embodiment, some of the illustrated elements may be provided on another device that is separated from the second electronic device 500 and is connected via a wired or wireless communication interface. For example, the second electronic device 500 may be implemented as a desktop PC that does not include a display, and in this case, the second display 510 may be implemented on a separate display device.

According to various embodiments, the second display 510 may display an image. For example, the second display 510 may display a virtual display generated in a task executed by a first electronic device (e.g., the first electronic device 400 of FIG. 4) via a screen sharing service. The second display 510 may be implemented as an external display device independent of the second electronic device 500.

According to various embodiments, the second communication interface 540 may support a wired or wireless connection to the first communication interface of the first electronic device. If the second communication interface 540 is implemented as a wired interface, interface terminals to which cables are connected may be provided on the second electronic device 500 or on the external display device.

According to various embodiments, the second memory 530 may include a non-volatile memory and a volatile memory.

According to various embodiments, the second processor 550 is an element capable of performing operations or data processing related to control and/or communication of respective elements of the second electronic device 500, and may be operatively, functionally, and/or electrically connected to respective elements of the second electronic device 500 including the second display 510, the second communication interface 540, and the second memory 530. The second processor 550 may execute multiple applications via an operating system (e.g., Windows) independent of the first electronic device.

According to various embodiments, the second processor 550 may identify connection to the first electronic device via the second communication interface 540. The second processor 550 may receive a list of applications installed in the first electronic device from the connected first electronic device, and may display an icon corresponding to each application on the second display 510 on the basis of the list.

According to various embodiments, in response to a user input for an icon displayed on the second display 510, the second processor 550 may transmit, to an external device, a request for executing a first task corresponding to the icon. Here, the user input may include a mouse click and a touch/hovering input. The first electronic device may execute the first task in response to the execution request and may generate a first virtual display so as to transmit the first virtual display to the second electronic device 500.

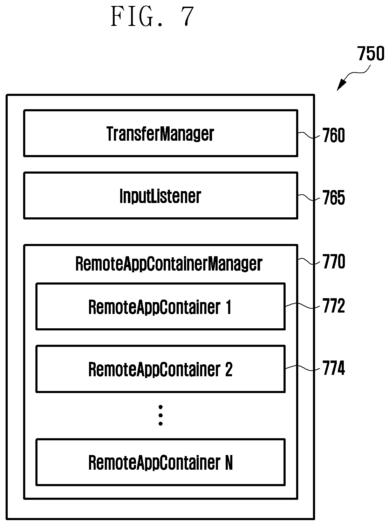

According to various embodiments, the second processor 550 may receive the first virtual display from the first electronic device and may display the first virtual display on the second display 510. The first electronic device may configure, as each container, a virtual display, an encoder, and an input surface for each task, and the second processor 550 may generate a container (e.g., a remote app container) corresponding to the container (e.g., an app execution container) generated by the first electronic device. Each container may have an ID and may be mapped to a container of the first electronic device via the ID. Containers corresponding to each other between the first electronic device and the second electronic device may form one mirroring session which may be independent of a mirroring session formed between other containers. Mirroring sessions formed between corresponding containers may be connected to other mirroring sessions via mutually independent communication channels (e.g., a USB channel and a Wi-Fi channel). The container configured by the second processor 550 will be described in more detail with reference to FIG. 7.

According to various embodiments, when virtual display or container-related information is transmitted, the second processor 550 may determine whether a flag indicating that virtual displays of multiple tasks are transmitted is included, may configure, if the flag is included, the received respective virtual displays into different mirroring sessions, and may display the same on windows independent of each other. According to various embodiments, the second processor 550 may transmit a request for executing a second task to the first electronic device in response to a second user input for execution of the second task while the first virtual display is being displayed. The second processor 550 may receive a second virtual display including an execution screen of the second task from the first electronic device.

According to various embodiments, the second processor 550 may display the received first virtual display and second virtual display on different windows. For example, a content of one application, task, or activity may be mirrored on each screen (or window) shared during the screen sharing service. The second processor 550 may configure surface views drawn by respective containers in different windows so that execution screens of respective tasks are displayed on different windows.

According to various embodiments, the second processor 550 may receive a user input in a state where the first virtual display and the second virtual display are displayed. The second processor 550 may transmit, to the first electronic device, input event information and an ID of a virtual display on which the user input has been received, and the first electronic device may process an input event received for the virtual display mapped to the ID.

FIG. 6 is a block diagram of a first electronic device for providing a screen sharing service according to various embodiments.

Each element illustrated in FIG. 6 is a software component that may be stored and executed in a first electronic device 600 (e.g., the first electronic device 400 of FIG. 4) for a screen sharing service. Each component name defines a class name for performing of a relevant operation in a program, and does not limit an operation performed according to each component name.

Referring to FIG. 6, the first electronic device 600 may include a transfer manager 620, an input manager 625, an app execution container manager 610, and a system service component 630. The system service component 630 is a set of service components executed at a system level and may include a remote app mode service 631, a display manager 633, an activity task manager 635, a task watcher 637, and a rotation manager. At least some (e.g., the transfer manager 620, the input manager 625, the display manager 633, and the activity task manager 635) of the illustrated element may be components implemented on an Android framework, but some functions may be added to implement various embodiments.

According to various embodiments, the first electronic device 600 may manage, as a container, components (e.g., a virtual display, an input surface, and a video encoder) that execute tasks or applications to be executed, and may generate a separate container for each application or task.

According to various embodiments, app execution containers 612 and 614 may serve to generate and control respective virtual displays in the first electronic device 600. The app execution containers 612 and 614 may have IDs that are identifiers and may be mapped to designated remote app containers (e.g., remote App containers 772 and 774 of FIG. 7) of a second electronic device via the IDs.

According to various embodiments, a content of one application, task, or activity may be mirrored on each screen (or window) shared during the screen sharing service, and accordingly, the app execution containers 612 and 614 may have a package name or task ID of the application. Table 1 below shows examples of data owned and/or managed by the app execution containers 612 and 614.

[Table 1]

| Information | Descriptions |
|---|---|
| ID | An identifier of a container (or an app execution container)<br>When a request and an event received from the second external device are processed, a container for processing may be retrieved based on an ID. |
| Display ID | An identifier of a virtual display where an application mapped to the container is running<br>When virtual display information is changed or a relevant event occurs, a request may be transmitted to a display ID, or a container mapped to a corresponding virtual display may be retrieved. |
| App Package Name | A package name of an application mapped to a container<br>When an application is executed on a container, the application may be executed based on corresponding package information. |
| Display-related information | A surface assigned to a virtual display<br>A surface size, dots per inch (DPI), and orientation state information may be stored. |
| Task ID | An identifier of a task executed on a container<br>When a task is executed or terminated, a container may be retrieved based on this value. |
| Task termination cause information | Information related to a cause of termination when a task is terminated<br><br>A value of termination by a user, normal termination, termination due to overheating of a device, or termination immediately after application launch may be available.<br>When a task is terminated, a GUI may be processed in the second electronic device according to task termination cause information. |
| Time stamp Information | Time information of a container generation time, a task start time, a task termination time, and/or a container activation and deactivation time<br>Time stamp information may be used when more applications than a maximum number are executed, and when a recently used application is detected or a cause of application termination is determined. |

According to various embodiments, the app execution container manager 610 may control overall logic related to the screen sharing service in the first electronic device 600. For example, the app execution container manager 610 may receive an application (or task) execution request from the second electronic device (e.g., the second electronic device 500 of FIG. 5) connected via a communication interface (e.g., the first communication interface 420 of FIG. 4) so as to generate, own, and manage the app execution container. When a request related to an application is received from the second electronic device, the app execution container manager 610 may distribute the received request to a designated app execution container by using an ID of the app execution container. When an event occurs on the system of the first electronic device 600, the app execution container manager 610 may designate an app execution container by using a virtual display ID or a task ID so as to transmit the event to the app execution container, or may serve to perform transfer to a remote app container manager (e.g., a remote app container manager 770 in FIG. 7) of the second electronic device. According to various embodiments, the transfer manager 620 may transmit screen data encoded by an app execution container, user input information, various requests, and/or event information to the second electronic device.

According to various embodiments, the input manager 625 may be a component that injects, into the system, an input event transferred from the second electronic device. In the input manager 625, when a user input is sensed by an input listener of the second electronic device, this may be reported to a remote application container, and an input event may be transferred to a corresponding application execution container of the first electronic device 600 via the transfer manager 620 of the second electronic device. The app execution container may inject, into the system, the input event coming via the input manager 625.

According to various embodiments, the system service component 630 may include service components that are executed at a system level.

According to various embodiments, the remote app mode service 631 may perform a function that requires a system authority and a function of directly calling a function of each system service. For example, the remote app mode service 631 may receive a request from the app execution container manager 610 and transmit the request directly to the display manager 633 or the activity task manager 635, or may serve to receive callbacks for various events from the system service component 630 (e.g., the activity task manager 635, the task watcher 637, a rotation watcher 639, or a start activity interceptor) and transfer the callbacks to the app execution container manager 610.

According to various embodiments, the display manager 633 may serve to generate a virtual display according to execution of an application.

According to various embodiments, the activity task manager 635 may serve to manage activities and tasks. The activity task manager 635 may perform a start activity intercept-related operation to execute one application or task in one mirroring session.

According to various embodiments, the task watcher 637 may receive a task execution or termination event, and may use the same to process application execution or termination, sense a task execution pattern, and provide a notification to a user.

According to various embodiments, the rotation watcher 639 may sense a rotation event of a virtual display and may use the same to provide a mirroring content rotated in the same way from the second electronic device.

FIG. 7 is a block diagram of a second electronic device for providing a screen sharing service according to various embodiments.

Each element illustrated in FIG. 7 is a software component that may be stored and executed in a second electronic device 750 (e.g., the second electronic device 500 of FIG. 5) for a screen sharing service. Each component name defines a class name for performing of a relevant operation in a program, and does not limit an operation performed according to each component name.

According to various embodiments, a transfer manager 760 corresponds to a transfer manager 760 (e.g., the transfer manager 620 of FIG. 6) of a first electronic device, and may perform a function to transmit or receive virtual display data, user input information, various requests, and/or event information to or from the first electronic device.

According to various embodiments, an input listener 765 may monitor a user input that is input on a virtual display. When a user input is sensed, the input listener 765 may report the same to remote app containers 772 and 774 of a virtual display where the user input has occurred, and an input event may be transferred to the first electronic device via the transfer manager 760.

According to various embodiments, the remote app containers 772 and 774 are for displaying an application or task designated in the second electronic device 750, and each remote app container 772 or 774 may correspond to one mirrored virtual display. The remote app containers 772 and 774 have IDs, and may be mapped to app execution containers (e.g., the app execution containers 612 and 614 of FIG. 5) of the first electronic device having a designated ID. If a function of the remote app container 772 or 774 is called, a function of the app execution container of the first electronic device corresponding to the called remote app container may be called via the remote app container manager 770, the transfer manager 760, and the app execution container manager 770.

According to various embodiments, the remote app container manager 770 may generate and control the remote app containers 772 and 774 corresponding to respective virtual displays in the second electronic device 750. The remote app containers 772 and 774 may receive events coming from the input listener 765 and/or the first electronic device and may transfer the same to the respective remote app containers 772 and 774.

FIG. 8 illustrates examples of containers configured in a first electronic device and a second electronic device according to various embodiments.

According to various embodiments, a first electronic device (e.g., the first electronic device 400 of FIG. 4) may configure, in units of containers, an encoder (e.g., a first encoder 814 and a second encoder 824) (video encoder) that compresses image information generated by an executed task, an input surface (e.g., a first input surface 812 and a second input surface 822) that records image information, and a virtual display (e.g., a first virtual display 816 and a second virtual display 826) (virtual). For example, in relation to a screen sharing service, the first electronic device may generate and manage app execution containers 810 and 820 corresponding to the number of running applications or tasks.

According to various embodiments, the app execution containers 810 and 820 may serve to generate and control respective virtual displays in the first electronic device, and the respective app execution containers 810 and 820 may have IDs and may be mapped to designated remote app containers 860 and 870 of the second electronic device via the IDs.

According to various embodiments, the app execution containers 810 and 820 of the first electronic device and the remote app containers 860 and 870 of the second electronic device may include components corresponding to each other. For example, if one application or task is executed in a state where the screen sharing service is started, the first electronic device may generate the first app execution container 810 and the second electronic device may generate the first remote app container 860. Then, if a new application or task is executed, the first electronic device may generate a new second app execution container 820, and the second electronic device may generate a second remote app container 870. The corresponding app execution container and remote app container may configure a mirroring session.

According to various embodiments, containers corresponding to each other may configure an independent mirroring session. For example, the first app execution container 810 and the first remote app container 860 may configure a first mirroring session, and the second app execution container 820 and the second remote app container 870 may configure a second mirroring session. Mirroring sessions formed between containers corresponding to each other may be connected through mutually independent communication channels. For example, if the first electronic device and the second electronic device are connected via a USB interface, the first mirroring session and the second mirroring session may be configured via mutually independent USB channels (logical channels), and if the first electronic device and the second electronic device are connected via Wi-Fi (or WFD), the first mirroring session and the second mirroring session may be configured via mutually independent Wi-Fi channels.

According to various embodiments, data received from the respective app execution containers 810 and 820 is provided to the corresponding respective remote app containers 860 and 870 by using IDs, and the remote app containers may decode the incoming data and draw the same in surface views. The remote app container manager 850 may configure surface views 864 and 874 drawn by the respective remote app containers 860 and 870 in different windows and may display the same on a display (e.g., the second display 510 of FIG. 5).

According to various embodiments, the app execution containers 810 and 820 and the remote app containers 860 and 870 may transmit or receive a user input and event information to or from each other via each other's IDs. For example, when a user input is received on a feature task execution screen of the second electronic device, an app execution container manager 800 may distribute the received user input by determining an app execution container in which the user input is sensed, based on an ID received together with the user input.

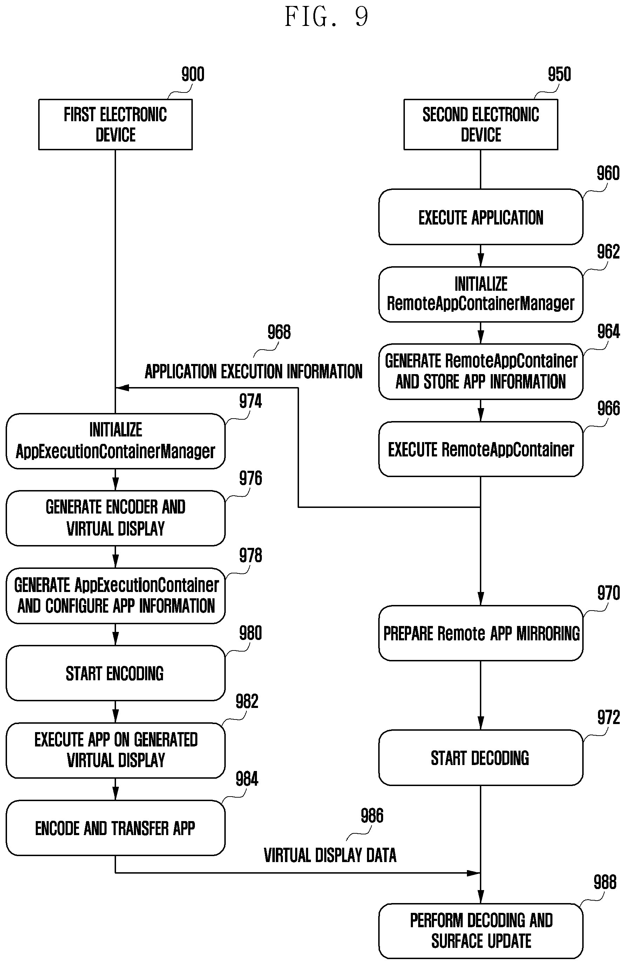

FIG. 9 is a flowchart of a method for providing a screen sharing service by a first electronic device and a second electronic device according to various embodiments.

FIG. 9 illustrates operations in which a first electronic device 900 (e.g., the first electronic device 400 of FIG. 4) and a second electronic device 950 (e.g., the second electronic device 500 of FIG. 5) are connected to each other via a wired or wireless interface, and after execution of a screen sharing service application, a virtual display generated by the first electronic device 900 is displayed on the second electronic device 950.

According to various embodiments, the first electronic device 900 and the second electronic device 950 may be connected via short-range wireless communication, such as Bluetooth, Wi-Fi, and Wi-Fi Direct, or connected via a wired interface, such as USB and HDMI, and alternatively may be connected in various ways, such as TCP/IP and UDP, via a cloud service. The first electronic device 900 and the second electronic device 950 may generate multiple transmission channels and may transmit control data, video data, and audio data of an application through different channels, respectively. For example, the first electronic device 900 and the second electronic device 950 open three TCP/IP sockets as server-client, and after the sockets are connected, socket communication channels may be used as a control channel, a video data channel, and an audio data channel, respectively.

According to various embodiments, the first electronic device 900 may transmit information of an application name, an icon, and/or a package name of an installed application to the second electronic device 950, and the second electronic device 950 may parse the received information and display the parsed information on a screen of the second electronic device 950.

According to various embodiments, in operation 960, the second electronic device 950 may receive a user input for execution of an application of the first electronic device 900.

According to various embodiments, in operation 962, the second electronic device 950 may generate and/or initialize a remote app container manager (e.g., the remote app container manager 770 of FIG. 7).

According to various embodiments, in operation 964, the remote app container manager may generate a new remote app container according to an application execution event and may configure, for the generated remote app container, information of an application selected according to the user input. The remote app container manager may configure, for the remote app container, a virtual touch input panel for receiving a user input (e.g., a mouse click and a touch/hovering input) when the application is used and may connect the same to an input listener (e.g., the input listener of FIG. 7).

According to various embodiments, in operation 966, the remote app container manager may execute the remote app container generated in operation 964.

According to various embodiments, in operation 968, the second electronic device 950 may transfer an application execution request to an app execution container manager (e.g., the app execution container manager 610 of FIG. 6) of the first electronic device 900 via a transfer manager (e.g., the transfer manager 760 of FIG. 7). According to an embodiment, the application (or task) execution request may include package name information of an application to be executed.

According to various embodiments, in operation 970, the second electronic device 950 may prepare for application mirroring. For example, the second electronic device 950 may allocate and initialize a resource for mirroring a virtual display received from the first electronic device 900. The second electronic device 950 may generate a window for displaying the virtual display and may generate a surface view. The second electronic device 950 may be assigned with a decoder for decoding encoded virtual display data from a decoder manager, and may connect an output surface of the decoder to the surface view.

According to various embodiments, in operation 972, the second electronic device 950 may execute the assigned decoder. Aforementioned operation 970 and/or operation 972 performed by the second electronic device 950 may be performed at least partially concurrently with operation 974 to operation 984 performed by the first electronic device 900, which will be described later, or may be performed later.

According to various embodiments, when an application (or task) execution request is received from the second electronic device 950, the first electronic device 900 may generate and/or initialize an app execution container manager (e.g., the app execution container manager 610 of FIG. 6) in operation 974. If the app execution container manager has already been generated and/or initialized, operation 974 may be omitted. The first electronic device 900 may receive the execution request including a container ID and package name information of the application to be executed from the second electronic device 950 via the transfer manager.

According to various embodiments, during generation and/or initialization of the app execution container manager, the app execution container manager may register a callback, such as on start activity intercepted, on task played/on task removed, and on rotation changed, which are required when an application or a task is executed. First, to explain the "on start activity intercepted", there may be a situation in which on start activity should be intercepted in order to execute one application or task in one mirroring session, or to reduce unnecessary application termination. To this end, the app execution container manager may request event subscription registration from a remote app mode service (e.g., the remote app mode service of FIG. 6). In the remote app mode service, event subscription may be registered in an activity task manager (e.g., the activity task manager of FIG. 6) and an event may be transferred to the app execution container manager when the event occurs. When a task is executed or terminated, this event is transferred to the app execution container manager, and the event may be processed in each device. The "on task played/on task removed" callback is information required for event processing in the first electronic device 900 and the second electronic device 950 when an application or task is executed or terminated. To this end, in the remote app mode service, a task watcher (e.g., the task watcher 637 of FIG. 6) may be generated, and event subscription may be registered. The "on rotation changed" is information required for screen rotation and input coordinate correction in the first electronic device 900 and the second electronic device 950 when a virtual display for mirroring is rotated. To this end, a rotation watcher (e.g., the rotation watcher 639 of FIG. 6) may be generated in the remote app mode service (the remote app mode service 631 of FIG. 6) and event subscription may be registered. If rotation information of the virtual display is changed, a rotation event may be transferred to the app execution container manager, and the rotation event may be processed in the first electronic device 900 and the second electronic device 950.

According to various embodiments, in operation 976, the app execution container manager may generate and initialize a virtual display and an encoder for performing mirroring. In this case, a flag may be added to distinguish a virtual display to be generated from virtual displays for other purposes. Here, the flag may indicate that virtual displays of multiple tasks are transmitted to the second electronic device 950. The app execution container manager may generate a new encoder and may acquire an input surface from the generated encoder. After that, generation of a virtual display is requested in the remote app mode service, and the input surface of the encoder may be configured to be a surface of the virtual display.

According to various embodiments, in operation 978, the app execution container manager may generate a new app execution container and may store information, such as a package name of an application to be executed, a virtual display, an encoder, and a surface.

According to various embodiments, in operation 980, the app execution container manager may transmit a request to an encoder manager so as to execute the encoder generated in operation 976.

According to various embodiments, in operation 982, the app execution container manager may execute the app execution container generated in operation 978. The app execution container may extract an application start intent from the application package name included in the execution request received from the second electronic device 950, and may store an ID of a screen to be executed in an activity option of the intent. If the intent is executed, a basic activity of an application may be executed on the virtual display.

According to various embodiments, in operation 984, if the application is executed on the virtual display and a content of the application is drawn on the surface, screen information of the application may be converted into a video format via a video encoder so as to be output in byte buffer format.

According to various embodiments, in operation 986, the app execution container may add an ID of the app execution container to metadata of buffer data to be output and may transfer the same to the transfer manager, and the transfer manager may transmit virtual display data to the second electronic device 950.

According to various embodiments, in operation 988, upon reception of encoded video data, the transfer manager of the second electronic device 950 may transfer the received data to the remote app container manager. The remote app container manager may extract the ID from the metadata of the video data and may determine a corresponding remote app container by using the ID. When the remote app container manager transfers data to the identified remote app container, the remote app container may input the data to the decoder. When information on the virtual display is decoded via the decoder, screen information may be drawn on a surface view connected to the decoder and may be displayed in a designated window on the display of the second electronic device 950.

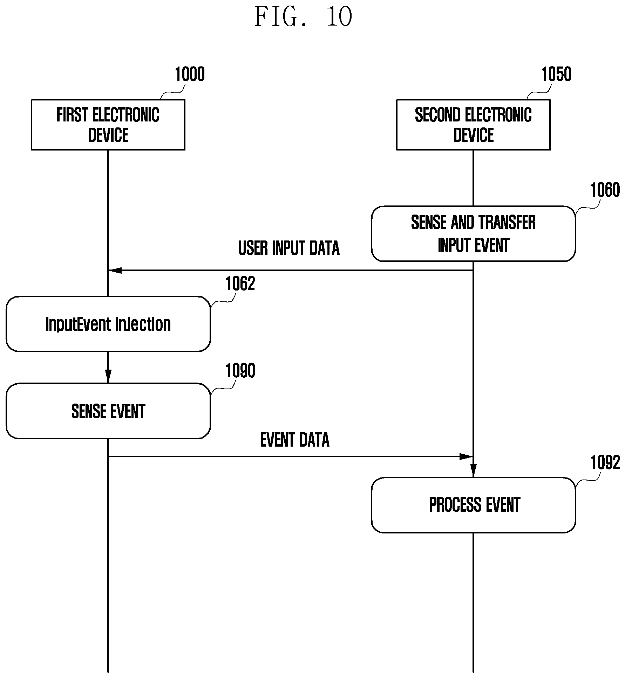

FIG. 10 is a flowchart of a method for processing an event and a user input by a first electronic device and a second electronic device according to various embodiments.

The method illustrated in FIG. 10 may be performed by a first electronic device 1000 (e.g., the first electronic device 400 of FIG. 4) and a second electronic device 1050 (e.g., the second electronic device 500 of FIG. 5) described above, and illustrated operations may be performed after the virtual display data generated by the first electronic device described with reference to FIG. 9 is displayed on the second electronic device.

Operations 1060 and 1062 and operations 1070 and 1072 are independent of each other, and the order thereof may be changed, and only some of the operations may be performed.

According to various embodiments, in operation 1060, the second electronic device 1050 may sense a user input event and transmit the same to the first electronic device 1000. For example, when a user's mouse click, keyboard input, and/or touch/hovering input is received on a virtual display displayed on the second electronic device 1050, input data may be sensed via an input listener (e.g., the input listener 765 of FIG. 5) through a formed control channel.

The second electronic device 1050 may add, to the input data, an ID of a remote app container corresponding to the virtual display, may modulate the input data into a transmittable form, and then transmit the same to the first electronic device 1000 via a transfer manager.

According to various embodiments, in operation 1062, when user input data is transferred via the transfer manager, the first electronic device 1000 may determine an app execution container via the ID of the transmitted data. An app execution container manager (e.g., the app execution container manager 610 of FIG. 6) may restore the input data into a processable input and then may input the user input to a matching app execution container via an input manager (e.g., the input manager 625 of FIG. 6). According to an embodiment, an ID of a virtual display of the second electronic device 1050 may be configured for the input event, and a virtual display of the first electronic device 1000, to which the user input is to be applied, may be identified using the ID of the virtual display.

According to various embodiments, in operation 1070, the first electronic device 1000 may identify an event occurring on a system or application of the first electronic device 1000. For example, the event may be an orientation change (e.g., a change from a portrait mode to a landscape mode) of the first electronic device 1000. When the event occurs, the first electronic device 1000 may transfer the event to the app execution container manager via a callback registered during generation and/or initialization of the app execution container manager. The app execution container manager may directly process the event or may transmit the event to the second electronic device 1050. According to an embodiment, the app execution container manager may determine an app execution container that needs to process the event, via the transferred virtual display ID and task ID, so as to transfer the event, and the event may be processed in the corresponding app execution container.

According to various embodiments, in operation 1072, the second electronic device 1050 may process the event received from the first electronic device 1000. When the first electronic device 1000 transmits an occurred event to the second electronic device 1050, event data may be received via the transfer manager of the second electronic device 1050. When the event is received, the remote app container manager may directly process the event or may determine, based on the ID, a remote app container to process the event, and may transfer the event to the corresponding container. The remote app container having received the event may process the received event. For example, when the orientation of the first electronic device 1000 is changed from the portrait mode to the landscape mode and a rotation event thus occurs, the remote app container manager may determine, based on an ID, a remote app container to perform rotation and may transfer orientation information. The remote app container may rotate a screen according to the orientation information, and may also rotate a virtual touch input panel that receives a user input.

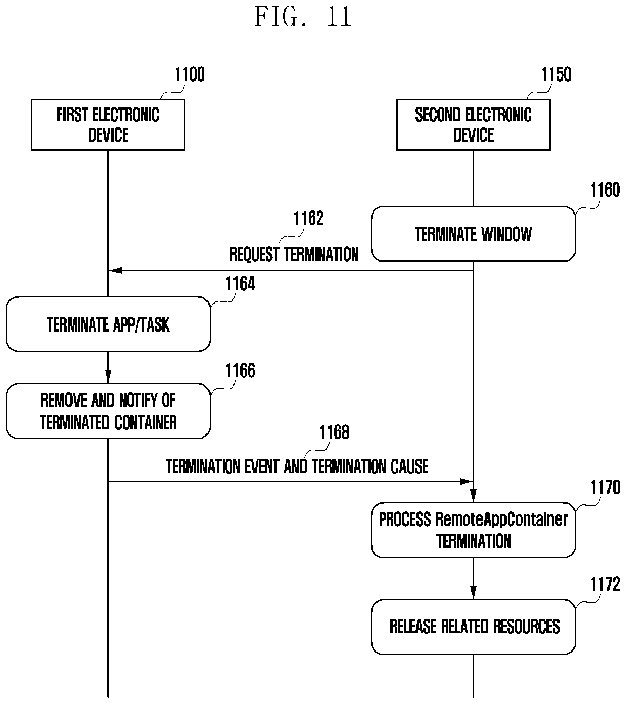

FIG. 11 is a flowchart of a method performed by a first electronic device and a second electronic device when an application is terminated, according to various embodiments.

The method illustrated in FIG. 11 may be performed by a first electronic device 1100 (e.g., the first electronic device 400 of FIG. 4) and a second electronic device 1150 (e.g., the second electronic device 500 of FIG. 5) described above, and illustrated operations may be performed after the virtual display data generated by the first electronic device described with reference to FIG. 9 is displayed on the second electronic device.

According to various embodiments, in operation 1160, if a user terminates one of windows in which a virtual display is displayed, a remote app container manager (e.g., the remote app container manager 770 of FIG. 7) of the second electronic device 1150 may terminate a remote app container corresponding to the virtual display.

According to various embodiments, in operation 1162, the remote app container manager may transmit a request for terminating a corresponding application or task to an app execution container manager (e.g., the app execution container manager 610 of FIG. 6) of the first electronic device 1100 via a transfer manager (e.g., the transfer manager 760 of FIG. 7). Here, the termination request may include an ID of a corresponding container or virtual display.

According to various embodiments, in operation 1164, the app execution container manager of the first electronic device 1100 may determine a corresponding app execution container via the ID included in the termination request, and may record a cause of termination. The app execution container manager may terminate an application or task configured in the determined app execution container.

According to various embodiments, in operation 1166, when the task is terminated, a callback indicating that the task has been terminated is generated from an activity task manager (e.g., the activity task manager 635 of FIG. 6), and the app execution container manager may receive the callback so as to remove the terminated app execution container.

According to various embodiments, in operation 1168, when the task is terminated and the container is removed, the app execution container manager may transmit a termination event and a termination cause to the remote app container.

According to various embodiments, in operation 1170, the remote app container may terminate the remote app container mapped to the terminated application or task.

According to various embodiments, in operation 1172, the second electronic device 1150 may release all related resources when the application or task is terminated. The second electronic device 1150 may close a window of the terminated virtual display and may stop and release a decoder that decodes virtual display data.

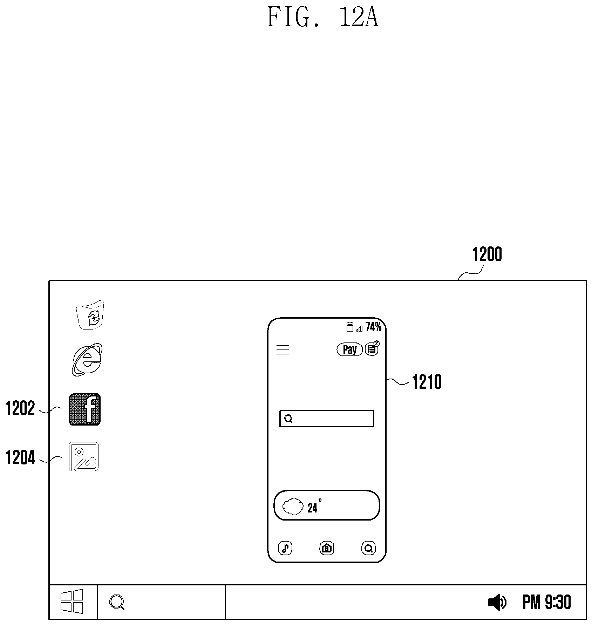

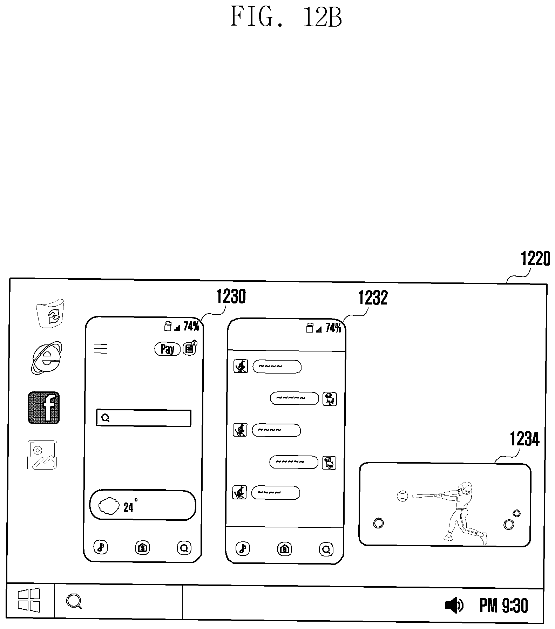

FIG. 12A and FIG. 12B illustrate screens provided on a display of a second electronic device according to various embodiments.

Referring to FIG. 12A, a second electronic device (e.g., the second electronic device 500 of FIG. 5) may display, while being connected to a first electronic device (e.g., the first electronic device 400 of FIG. 4), a virtual display 1210 transmitted from the first electronic device on a display (e.g., the second display 510 of FIG. 5).

A second electronic device 1200 may receive application list information from the first electronic device, may display, on a display, icons 1202 and 1204 corresponding to applications of the first electronic device, and may transmit a request for executing an application to the first electronic device, based on a user input to the icons.

Referring to FIG. 12B, if multiple virtual displays are concurrently received from the first electronic device, the second electronic device 1200 may configure and display each of virtual displays 1230, 1232, and 1234 as a different window. The respective illustrated windows may be virtual displays generated according to execution of different tasks.

If user inputs are sensed in respective windows, the second electronic device 1200 may transmit, to the first electronic device, IDs of the virtual displays (or containers) 1230, 1232, and 1234 displayed on the corresponding windows and input event information.

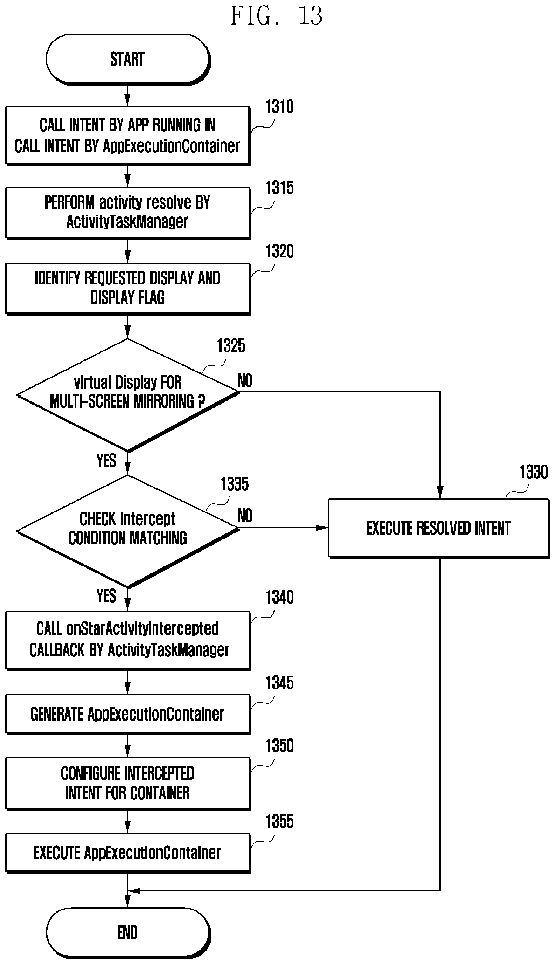

FIG. 13 is a flowchart of a method for processing an execution screen by a first electronic device when a new task is executed during a screen sharing service, according to various embodiments.

The method illustrated in FIG. 13 may be performed by a first electronic device (e.g., the first electronic device 400 of FIG. 4) described above, and illustrated operations may be performed after the virtual display data generated by the first electronic device described with reference to FIG. 9 is displayed on a second electronic device.

According to various embodiments, the first electronic device may drive only one application or task in one mirroring session, so that the second electronic device displays, on an independent window, a virtual display transferred via each mirroring session. For example, in addition to execution of an application of the first electronic device according to a user input, an application may execute another application. For example, if a user presses a URL of a chatting window while using a messenger application, an Internet browser application may be executed. Various embodiments may provide a virtual display of a new application or task via a separate container when the new application or task is executed as described above.

According to various embodiments, in operation 1310, an intent for execution of a new application may be generated according to an event occurring in an application running in an app execution container. For example, if a messenger application is running on a first device display and the user selects an Internet URL in the messenger application, an ACTION_VIEW intent may be generated together with the URL.

According to various embodiments, in operation 1315, the activity task manager (e.g., the activity task manager 635 of FIG. 6) may determine an activity corresponding to the intent. The activity task manager may execute an appropriate activity from the intent according to a user configuration or an application installation situation. For example, an intent for execution of a browser activity of the Internet browser application may be executed according to the ACTION_VIEW intent.

According to various embodiments, in operation 1320, the activity task manager may identify a virtual display where the intent has been generated, and may determine whether a flag is attached to the container of the virtual display. Here, the flag may indicate that virtual displays of multiple tasks are transmitted to the second electronic device. For example, the activity task manager may determine whether a flag has been configured for the first virtual display in which the intent has been generated.

According to various embodiments, in operation 1325, the activity task manager may determine whether the virtual display in which the intent has been generated is configured for multi-screen mirroring according to the flag.

According to various embodiments, if multi-screen mirroring is not configured, a corresponding application may be executed on the same virtual display in operation 1330. For example, the Internet browser may operate in the foreground on the first virtual display.

According to various embodiments, if multi-screen mirroring is not configured, it may be determined in operation 1335 whether there is an application or task that is already running on the virtual display where the intent has been generated. For example, if the messenger application is already running on the first virtual display, an on start activity intercepted callback may be generated together with an APP_TO_APP_LAUNCHED flag.

According to various embodiments, if there is an application or task already running on the virtual display, the activity task manager may call the on start activity intercepted callback in operation 1340.

According to various embodiments, in operation 1345, the app execution container manager may receive the callback and may generate a new app execution container. The new app execution container may include a second virtual display.

According to various embodiments, in operation 1350, the app execution container manager may configure an intercepted intent for the new app execution container.

According to various embodiments, in operation 1355, the app execution container manager may execute the generated app execution container. The app execution container manager may execute the intent after configuring the second virtual display corresponding to the app execution container as a preferred display of the intent. In this case, while an application is being executed in an app execution container deferring from the previously executed app execution container, the Internet browser application may be executed on the second virtual display independently of the messenger application running on the first virtual display. Accordingly, the messenger application may be mirrored to the second electronic device via the first virtual display, and the Internet browser application may be mirrored to the second electronic device via the second virtual display.

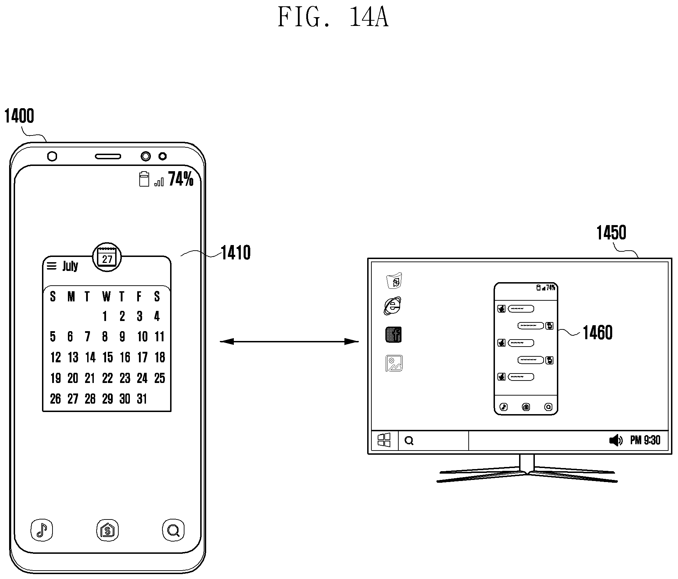

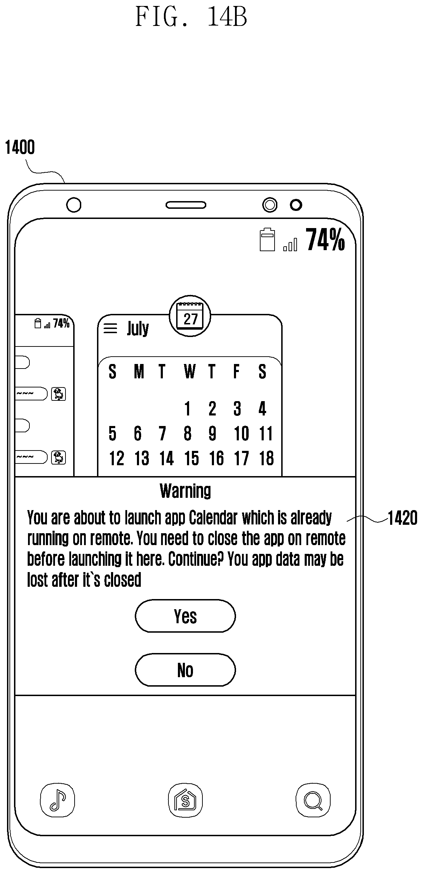

FIG. 14A and FIG. 14B illustrate screens provided by a first electronic device and a second electronic device when a new task is executed, according to various embodiments.

According to an embodiment, while a task is running on a display (e.g., the first display 410 of FIG. 4) of the first electronic device, an execution intent of the task may be sensed according to a user input or an event of the second electronic device.

Referring to FIG. 14A, in a state where a calendar application 1410 is displayed on the display of the first electronic device 1400 and a virtual display 1460 of a messenger application is provided to the second electronic device 1450, a request for executing the calendar application may be received by the first electronic device 1400 according to a user input for an application icon or a request of the messenger application.

In this case, as illustrated in FIG. 14B, the first electronic device 1400 may display a dialogue 1420 for determination of whether to move an execution position of an application from the display of the first electronic device to a display of the second electronic device 1450 may be displayed on the display of the first electronic device 1400.

If the user allows, on the dialogue, movement of the application, the first electronic device may terminate an application running on a main display and may execute the calendar application on a new virtual display.

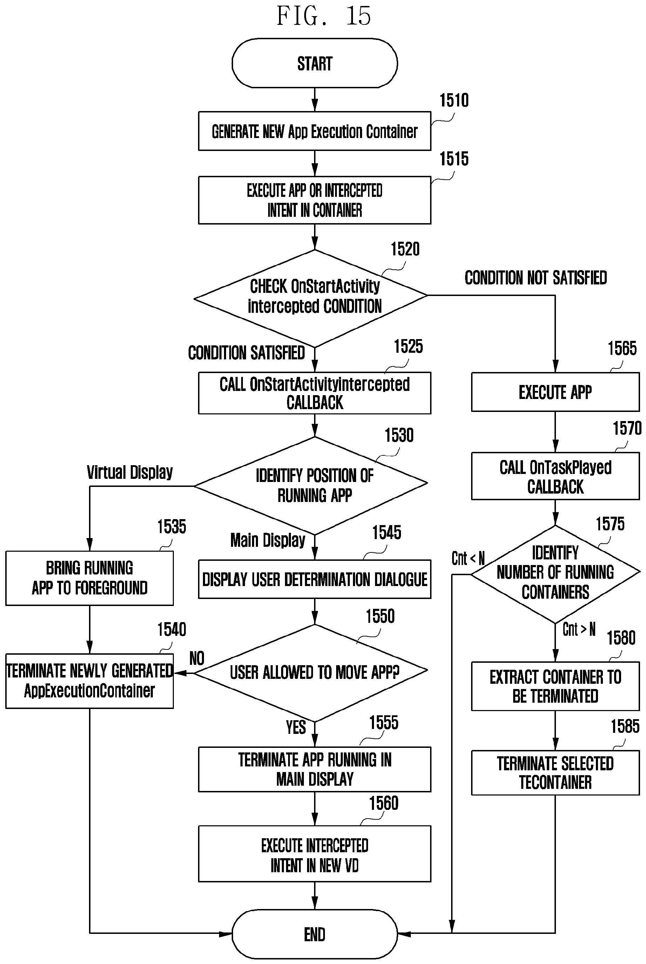

FIG. 15 is a flowchart of a method for processing a task on a new virtual display by a first electronic device according to various embodiments.

According to various embodiments, in operation 1510, a first electronic device may generate a new app execution container according to a task execution request received from a second electronic device.

According to various embodiments, in operation 1515, the first electronic device may execute an application or an intercepted intent in the generated container.

According to various embodiments, processing when an application or task requested to be executed is already running in another display may be implemented via an on start activity intercepted callback. For example, if a task of the same application is already being executed, an activity task manager may sense the execution so as to provide a notification of the same with a designated flag to an app execution container manager. The app execution container manager may determine a matching app execution container so as to transfer the same to the second electronic device. The second electronic device may receive an event thereof and bring a matching remote app container to the foreground.

Table 2 shows conditions checked by the activity task manager, generated flags, and operations of the app execution container when the flags are received.

[Table 2]

| Conditions | Generated flags | Operations |
|---|---|---|
| When an intent for execution of a new application or task has been executed on a virtual display, but another application or task is already running on the corresponding virtual display | APP_TO_APP_LAUNCHED | After generating a new app execution container, executing an application in the corresponding container |

(continued)

| Conditions | Generated flags | Operations |
|---|---|---|
| When a resolved activity is already running in another virtual display | RUNNING_ON_VIRTUAL DISPLAY | Bringing a running remote app container to the foreground |
| When a resolved activity is running in a main display | RUNNING_ON_MAIN DISPLAY | Asking a user whether to move an application to a virtual display Alternatively, mirroring the main display |
| When a flag only for multi-screen mirroring is configured for a pending intent of notification | NOTIFICATION_INTENT_SENT | After generating a new app execution container, executing the pending intent of notification in a corresponding container |

According to various embodiments, in operation 1520, the first electronic device may identify an on start activity intercepted condition. For example, the app execution container manager may register an on start activity intercepted callback during initialization, which may indicate that an on start activity should be intercepted in a specified situation. According to various embodiments, if the on start activity intercepted condition is satisfied, the app execution container manager may call the on start activity intercepted callback in operation 1525.

According to various embodiments, in operation 1530, the first electronic device may identify a position of a running application in relation to the intercepted intent.

According to various embodiments, when an application is running on a virtual display, the first electronic device may cause the second electronic device to bring the running application to the foreground in operation 1535, and may terminate the generated app execution container in operation 1540. For example, the app execution container manager of the first electronic device may determine an app execution container matching the running application so as to transfer the same to the second electronic device. The second electronic device may receive an event thereof and bring a matching remote app container to the foreground.

According to various embodiments, if an application is running on a main display of the first electronic device, the first electronic device may display, on the main display in operation 1545, a dialogue for determination of whether to move an execution position of the application to the display of the second electronic device.

According to various embodiments, if the user allows movement of the application, on the dialogue in operation 1550, the application running on the main display of the first electronic device may be terminated in operation 1550, and the intercepted intent may be executed on a new virtual display in operation 1560.

According to an embodiment, when the user executes an application or task, or an intent is generated from an application so that a new application or task is executed, there may be a case where the corresponding application is already running on another display (e.g., the main display or virtual display of the first electronic device). In this case, depending on a display on which the application is running, implementation may be performed as follows. First, when the application is running on the main display of the first electronic device, if the application is moved to a virtual display, user data may be lost, so that the application may be moved after the user determines whether to move the application to the virtual display. Alternatively, when the application is running in another virtual display, the container generated according to the intent may be terminated, and a previously running container may be identified so as to be brought to the foreground.

According to various embodiments, if the on start activity intercepted condition is not satisfied as a result of the determination in operation 1520, the first electronic device may execute an application of the corresponding intent in operation 1560.

According to various embodiments, in operation 1570, the first electronic device may call an on task played callback.

According to various embodiments, in operation 1575, the first electronic device may identify the number of running containers.

According to various embodiments, if the number of running containers is greater than a reference number, the first electronic device may extract, in operation 1580, a container to be terminated from among the running containers, and may terminate the selected container in operation 1585.

According to various embodiments, the first electronic device may determine a maximum number of virtual displays (or containers) to be provided to the second electronic device. The maximum number may be assigned in advance in accordance with a processor and a memory, or may be determined by the first electronic device on the basis of at least one among available resources of the processor and/or the memory, temperature of the first electronic device, and a transmission rate of data transmitted to an external device via a communication interface.

For example, if a resource of the electronic device is limited, it is necessary to calculate and limit the number of virtual displays available for mirroring at the same time. According to an embodiment, the first electronic device may obtain the maximum number of virtual displays that can be simultaneously mirrored, as follows.

$$N = \text{area of total encoder surfaces} / \text{size of maximum mirroring resolution}$$

For example, if an area of total encoder surfaces is 23,760,000 and a maximum mirroring resolution is FHD+ (2200*1080) that is same as a resolution of the first electronic device, the maximum number of virtual displays available for mirroring at the same time may be 23,760,000/(2200*1080) which is 10.

According to another embodiment, if camera recording encoding is supported during mirroring, a part of an encoder surface is used, so that the first electronic device may obtain the maximum number of virtual displays that can be simultaneously mirrored, as follows.

$$N = (\text{area of total encoder surfaces} - \text{Chloe shooting resolution}) / \text{size of maximum mirroring resolution}$$

For example, if a camera application is recording a video with a maximum shooting resolution of 3840*2160, calculation is performed so that N = 6.50, and mirroring of up to 6 virtual displays may be performed at the same time.

According to an embodiment, the maximum number of virtual displays available for mirroring at the same time may be determined to be a number predefined for each chip set (e.g., the processor and the memory of the first electronic device). For example, the first electronic device may control virtual displays with a fixed maximum number according to a type of chip set included in the first electronic device.

According to an embodiment, the first electronic device may determine the maximum number of virtual displays that can be simultaneously mirrored, according to an overheating state of the first electronic device. For example, the first electronic device may determine the maximum number to be 5 if temperature is lower than 45 degrees, may determine the maximum number to be 1 if the temperature is between 45 degrees and 60 degrees, and may not provide a virtual display to the second electronic device if the temperature is higher than 60 degrees.

According to an embodiment, the first electronic device may determine the maximum number of virtual displays that can be simultaneously mirrored, according to an average transmission rate. For example, the first electronic device may determine the maximum number to be 5 if an average transmission rate is 5 MB/s or higher, may determine the maximum number to be 3 if the average transmission rate is 3 MB/s to 5 Mb/s, and may determine the maximum number to be 1, if the average transmission rate is 1 MB/s to 3 MB/s.

According to various embodiments, if mirroring sessions more than the maximum number of N mirroring sessions (or virtual displays or containers) are generated, the first electronic device may terminate the excess number of sessions. According to an embodiment, the first electronic device may terminate a mirroring session having a longest time from being used by the user. The app execution container may store time stamps for a generation time, an activation time, and a deactivation time of a container, and if the user selects one window on the second electronic device, remaining containers other than a container of a corresponding virtual display may be deactivated. The app execution container manager may terminate an oldest deactivated mirroring session, based on a time stamp of each app execution container.

According to an embodiment, after app execution containers are generated, if the number of running app execution containers exceeds the maximum number, the first electronic device terminates an oldest app execution container, in which case, the app execution container may be unintentionally terminated. For example, when N mirroring sessions are running, and container 1 is the oldest container, if a new application is executed by a user input on the second electronic device, container N+1 may be generated, and container 1 that is the oldest container may be terminated. If an application or task executed by the user is already running on the main display or virtual display of the first electronic device, and the user does not want to move the application or task to another display, container N+1 may be terminated without application or task execution. In this case, only N-1 containers may be executed according to the termination of container 1. This case may be due to the fact that it is not possible to know exactly which application or task will be performed when the user executes an application. For example, if an email application is capable of driving an inbox task and a composer task at the same time, when the user executes the email application, an intent for executing a main launcher activity of the email application may be obtained, but a task to be generated is unknown when the intent is started, and the task may be identified after execution of the intent. In order to solve this case, according to various embodiments, a routine of terminating one app execution container when the number of concurrently running app execution containers exceeds the maximum number may not be performed at the time when a new execution container is generated, and the routine may be performed at the time when a task is actually executed in the app execution container. To this end, upon reception of when an event indicating that a new task is performed, a task watcher of a remote app mode service may terminate the number of tasks exceeding the maximum number.

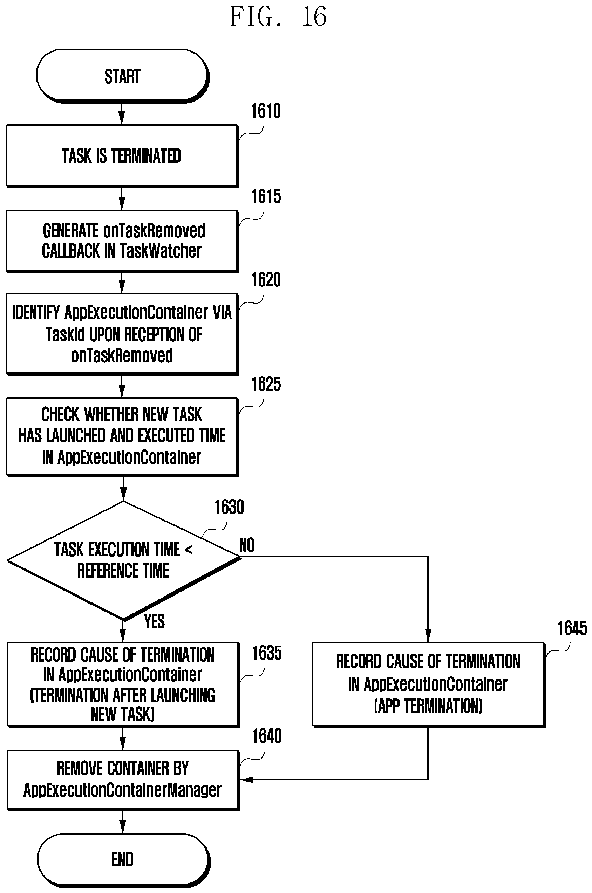

FIG. 16 is a flowchart of a method for, when a task immediately terminated after launching is executed, processing the task by a first electronic device according to various embodiments.

According to an embodiment, when a virtual display is mirrored in units of tasks, unexpected launching of some applications may occur. For example, when some applications are executed, a first task is generated and executed, and this task may be terminated immediately after causing execution of a second task. In this case, there may be a situation where a virtual display for the first task, which is immediately terminated, should be terminated immediately after generation thereof. To prevent this situation, the first electronic device may perform implementation to configure an execution pattern of a task for an app execution container, and sense the configured pattern when the task is terminated so as to cause the virtual display to be terminated on the second electronic device.

According to various embodiments, in operation 1610, the first electronic device may sense termination of a task running on a virtual display.

According to various embodiments, in operation 1615, an on task removed callback may be generated in a task watcher (e.g., the task watcher of FIG. 6).

According to various embodiments, in operation 1620, when the on task removed callback is received, an app execution container manager may determine an app execution container via a task ID.

According to various embodiments, in operation 1625, the app execution container may check whether a new task has been launched and an execution time. For example, the app execution container manager may check whether a second task is executed immediately after execution of a first task on the virtual display, and a time at which the first task is terminated after execution thereof. When launching of the second task is sensed in a corresponding app execution container, the app execution container manager may configure, to true, a flag indicating that the task has been launched. Then, if the task is immediately terminated, the task launch flag and the execution time of the task may be checked.

According to various embodiments, in operation 1630, the app execution container manager may determine whether an execution time of the first task that is executed and then terminated in the corresponding app execution container is less than a reference time (e.g., 2 seconds).

According to various embodiments, if the execution time of the first task terminated after execution is less than the reference time, a cause of termination may be recorded, in operation 1635, as termination after launching a new task in the app execution container.

According to various embodiments, in operation 1640, the app execution container manager may remove the app execution container.

According to various embodiments, if the execution time of the first task terminated after execution is greater than the reference time, the cause of termination may be recorded, in the app execution container, as application termination.

The second electronic device may receive a termination cause value of the task and may process the virtual display in which the task is executed.

An electronic device according to various embodiments may include a display, a communication interface, a memory, and a processor operatively connected to the display, the communication interface, and the memory, wherein the processor is configured to determine a connection to an external device via the communication interface, to receive a request for executing a first task from the external device, to execute the first task on the basis of an application stored in the memory in response to the request for executing the first task, generate a first virtual display including an execution screen of the first task, and transmit the first virtual display to the external device, to receive, during the execution of the first task, a request for executing a second task from the external device, and to execute the second task on the basis of an application stored in the memory in response to the request for executing the second task, generate a second virtual display including an execution screen of the second task, and transmit the second virtual display to the external device.

According to various embodiments, the processor may be configured to configure, as a first container, a first encoder configured to compress first image information generated in the first task, a first input surface on which the first image information is recorded, and the first virtual display, and configure, as a second container, a second encoder configured to compress second image information generated in the second task, a second input surface on which the second image information is recorded, and the second virtual display.

According to various embodiments, the processor may be configured to generate identification information of the first virtual display and transmit the same with the first virtual display to the external device, and generate identification information of the second virtual display and transmit the same with the second virtual display to the external device.

According to various embodiments, the processor may be configured to, when an input event for a virtual display is received from the external device, process the input event in the first task or the second task by using identification information included in the input event.

According to various embodiments, the processor may be configured to, if an intent for execution of a third task on the first virtual display is received from the external device, determine a virtual display corresponding to the third task.

According to various embodiments, the processor may be configured to, if no virtual display corresponding to the third task is generated, generate a third virtual display including an execution screen of the third task and transmit the third virtual display to the external device.

According to various embodiments, the processor may be configured to, if a virtual display corresponding to the third task is generated, cause the third task to operate in the foreground.

According to various embodiments, the processor may be configured to, when an execution screen of the third task is being displayed on the display, stop displaying of the execution screen of the third task on the display, generate a third virtual display including the execution screen of the third task, and transmit the third virtual display to the external device, or to transmit the execution screen of the third task, which is being displayed on the display, to the external device.

According to various embodiments, the processor may be configured to, if a request for executing a third task is received from the external device, identify the number of generated virtual displays including the first virtual display and the second virtual display, and if the number of the virtual displays exceeds a maximum number, terminate at least one of the generated virtual displays.

According to various embodiments, the maximum number of the virtual displays may be configured to be assigned in advance in accordance with the processor and the memory, or determined by the processor on the basis of at least one of available resources of the processor and the memory, temperature of the electronic device, and a transmission rate of data transmitted to the external device via the communication interface.

According to various embodiments, the processor may be configured to, if the number of the virtual displays exceeds the maximum number, terminate a virtual display corresponding to a task having a longest deactivation time from among tasks constituting the virtual display.

According to various embodiments, the processor may be configured to, if at least one of the virtual displays is terminated, transmit termination cause information of the task to the external device.

According to various embodiments, the communication interface may be configured to establish a wireless connection to the external device via Wi-Fi Direct.

A method for providing a screen on a display of an external device by an electronic device according to various embodiments may include an operation of determining a connection to the external device, an operation of receiving a request for executing a first task from the external device, an operation of executing the first task on the basis of an application stored in a memory in response to the request for executing the first task, generating a first virtual display including an execution screen of the first task, and transmitting the first virtual display to the external device, an operation of receiving, during the execution of the first task, a request for executing a second task from the external device, and an operation of executing the second task on the basis of an application stored in the memory in response to the request for executing the second task, generating a second virtual display including an execution screen of the second task, and transmitting the second virtual display to the external device.

According to various embodiments, the generating of the first virtual display may include configuring, as a first container, a first encoder configured to compress first image information generated in the first task, a first input surface on which the first image information is recorded, and the first virtual display.

According to various embodiments, the transmitting of the first virtual display to the external device may include generating identification information of the first virtual display and transmitting the same with the first virtual display to the external device, and the transmitting of the second virtual display to the external device may include generating identification information of the second virtual display and transmitting the same with the second virtual display to the external device.

According to various embodiments, the method further includes, when an input event for a virtual display is received from the external device, processing the input event in the first task or the second task by using identification information included in the input event.

According to various embodiments, the method further includes, if a request for executing a third task is received from the external device, identifying the number of generated virtual displays including the first virtual display and the second virtual display, and if the number of the virtual displays exceeds a maximum number, terminating at least one of the generated virtual displays.

An electronic device according to various embodiments may include a display, a communication interface, and a processor operatively connected to the display and the communication interface, wherein the processor is configured to determine a connection to an external device via the communication interface, to transmit, in response to a first user input for execution of a first task executable in the external device, a request for executing the first task to the external device, to receive a first virtual display including an execution screen of the first task from the external device, to transmit, in response to a second user input for execution of a second task executable in the external device, a request for executing the second task to the external device, to receive a second virtual display including an execution screen of the second task from the external device, and to display the first virtual display and the second virtual display on different windows on the display.

According to various embodiments, the processor may be configured to, if a third user input is sensed on a window of the first virtual display, transmit an event corresponding to the third user input with identification information of the first virtual display to the external device.

**Claims**

1. An electronic device comprising:

   a display;
   a communication interface;
   a memory; and
   a processor operatively connected to the display, the communication interface, and the memory,
   wherein the processor is configured to:

   determine a connection to an external device via the communication interface,
   receive a request for executing a first task from the external device,
   in response to the request for executing the first task, execute the first task on the basis of an application stored in the memory, generate a first virtual display including an execution screen of the first task, and transmit the first virtual display to the external device,
   during executing the first task, receive a request for executing a second task from the external device, and
   in response to the request for executing the second task, execute the second task on the basis of an application stored in the memory, generate a second virtual display including an execution screen of the second task, and transmit the second virtual display to the external device.

2. The electronic device of claim 1, wherein the processor is configured to :

   configure, as a first container, a first encoder configured to compress first image information generated in the first task, a first input surface on which the first image information is recorded, and the first virtual display, and configure, as a second container, a second encoder configured to compress second image information generated in the second task, a second input surface on which the second image information is recorded, and the second virtual display.

3. The electronic device of claim 1, wherein the processor is configured to :

   generate identification information of the first virtual display and transmit the same with the first virtual display to the external device, and
   generate identification information of the second virtual display and transmit the same with the second virtual display to the external device.

4. The electronic device of claim 3, wherein the processor is configured to :
   when an input event for a virtual display is received from the external device, process the input event in the first task or the second task by using identification information included in the input event.

5. The electronic device of claim 1, wherein the processor is configured to :
   when an intent for execution of a third task on the first virtual display is received from the external device, confirm a virtual display corresponding to the third task.

6. The electronic device of claim 5, wherein the processor is configured to :

   if a virtual display corresponding to the third task is generated, cause the third task to operate in the foreground when no virtual display corresponding to the third task is generated, generate a third virtual display comprising an execution screen of the third task and transmit the third virtual display to the external device.

7. The electronic device of claim 5, wherein the processor is configured to :

when an execution screen of the third task is being displayed on the display, stop displaying of the execution screen of the third task on the display, generate a third virtual display comprising the execution screen of the third task and transmit the third virtual display to the external device, or

transmit the execution screen of the third task, which is being displayed on the display, to the external device.

8. The electronic device of claim 1, wherein the processor is configured to :

when a request for executing a third task is received from the external device, identify the number of generated virtual displays comprising the first virtual display and the second virtual display, and

when the number of the virtual displays exceeds a maximum number, terminate at least one of the generated virtual displays.

9. The electronic device of claim 8,

wherein the maximum number of the virtual displays is configured to be assigned in advance in accordance with the processor and the memory, or

determined by the processor on the basis of at least one of available resources of the processor and the memory, temperature of the electronic device, and a transmission rate of data transmitted to the external device via the communication interface.

10. The electronic device of claim 9, wherein the processor is configured to :
when the number of the virtual displays exceeds the maximum number, terminate a virtual display corresponding to a task having a longest deactivation time from among tasks constituting the virtual display, and transmit termination cause information of the task to the external device.

11. A method for providing a screen on a display of an external device by an electronic device, the method comprising:

determining a connection to the external device;

receiving a request for executing a first task from the external device;

in response to the request for executing the first task, executing the first task on the basis of an application stored in a memory, generating a first virtual display including an execution screen of the first task, and transmitting the first virtual display to the external device;

during executing the first task, receiving a request for executing a second task from the external device; and

in response to the request for executing the second task, executing the second task on the basis of an application stored in the memory, generating a second virtual display including an execution screen of the second task, and transmitting the second virtual display to the external device.

12. The method of claim 11, wherein the generating of the first virtual display comprises configuring, as a first container, a first encoder configured to compress first image information generated in the first task, a first input surface on which the first image information is recorded, and the first virtual display.

13. The method of claim 12, wherein the transmitting of the first virtual display to the external device comprises generating identification information of the first virtual display and transmitting the same with the first virtual display to the external device, and

the transmitting of the second virtual display to the external device comprises generating identification information of the second virtual display and transmitting the same with the second virtual display to the external device.

14. The method of claim 13, further comprising, when an input event for a virtual display is received from the external device, processing the input event in the first task or the second task by using identification information included in the input event.

15. An electronic device comprising:

a display;

a communication interface; and

a processor operatively connected to the display and the communication interface,

wherein the processor is configured to determine a connection to an external device via the communication interface,

in response to a first user input for execution of a first task executable in the external device, transmit a request for executing the first task to the external device,

receive a first virtual display including an execution screen of the first task from the external device,

in response to a second user input for execution of a second task executable in the external device, transmit a request for executing the second task to the external device,

receive a second virtual display including an execution screen of the second task from the external device, and

display the first virtual display and the second virtual display on different windows on the display.

# FIG. 1

ELECTRONIC DEVICE 101

- INPUT DEVICE 150
- SOUND OUTPUT DEVICE 155
- DISPLAY DEVICE 160
- BATTERY 189
- POWER MANAGEMENT MODULE 188

MEMORY 130
- VOLATILE MEMORY 132
- NON-VOLATILE MEMORY 134
  - INTERNAL MEMORY 136
  - EXTERNAL MEMORY 138

PROCESSOR 120
- MAIN PROCESSOR 121
- AUXILIARY PROCESSOR 123

COMMUNICATION MODULE 190
- WIRELESS COMMUNICATION MODULE 192
- WIRED COMMUNICATION MODULE 194

SUBSCRIBER IDENTIFICATION MODULE 196
ANTENNA MODULE 197

AUDIO MODULE 170
SENSOR MODULE 176
HAPTIC MODULE 179
CAMERA MODULE 180
INTERFACE 177
CONNECTION TERMINAL 178

PROGRAM 140
- APPLICATION 146
- MIDDLEWARE 144
- OPERATING SYSTEM 142

100

SECOND NETWORK 199
ELECTRONIC DEVICE 104
FIRST NETWORK 198
ELECTRONIC DEVICE 102
SERVER 108

EP 4 178 214 A1

# FIG. 2

USER INPUT

APPLICATION SCREEN

200

250

255

EP 4 178 214 A1

FIG. 3A

375

Surface Flinger

300

360

Virtual Display ← 362

Input Surface ← 364

Video Encoder

370

Display Manager

FIG. 3B

350

| 384 | 382 | 380 |
|---|---|---|
| Video Decoder | Output Surface | Surface View |

FIG. 4

400

410

**FIRST DISPLAY**

430

**FIRST MEMORY**

450

**FIRST PROCESSOR**

420

**FIRST COMMUNICATION INTERFACE**

FIG. 5

500

510

**SECOND DISPLAY**

530

**SECOND MEMORY**

550

**SECOND PROCESSOR**

540

**SECOND COMMUNICATION INTERFACE**

# FIG. 6

600

| TransferManager | 620 |
| InputManager | 625 |

AppExecutionContainerManager — 610

| AppExecutionContainer 1 | 612 |
| AppExecutionContainer 2 | 614 |

⋮

| AppExecutionContainer N |

System Service — 630

| RemoteAppModeService | 631 |
| DisplayManager | 633 |
| ActivityTaskManager | 635 |
| Task watcher | 637 |
| Rotation watcher | 639 |

# FIG. 7

750

| TransferManager | 760 |

| InputListener | 765 |

RemoteAppContainerManager 770

| RemoteAppContainer 1 | 772 |

| RemoteAppContainer 2 | 774 |

⋮

| RemoteAppContainer N |

# FIG. 8

# FIG. 9

FIRST ELECTRONIC DEVICE — 900

SECOND ELECTRONIC DEVICE — 950

EXECUTE APPLICATION — 960

INITIALIZE RemoteAppContainerManager — 962

GENERATE RemoteAppContainer AND STORE APP INFORMATION — 964

EXECUTE RemoteAppContainer — 966

APPLICATION EXECUTION INFORMATION — 968

INITIALIZE AppExecutionContainerManager — 974

GENERATE ENCODER AND VIRTUAL DISPLAY — 976

GENERATE AppExecutionContainer AND CONFIGURE APP INFORMATION — 978

START ENCODING — 980

EXECUTE APP ON GENERATED VIRTUAL DISPLAY — 982

ENCODE AND TRANSFER APP — 984

PREPARE Remote APP MIRRORING — 970

START DECODING — 972

VIRTUAL DISPLAY DATA — 986

PERFORM DECODING AND SURFACE UPDATE — 988

# FIG. 10

FIRST ELECTRONIC DEVICE — 1000

SECOND ELECTRONIC DEVICE — 1050

SENSE AND TRANSFER INPUT EVENT — 1060

USER INPUT DATA

inputEvent inJection — 1062

SENSE EVENT — 1090

EVENT DATA

PROCESS EVENT — 1092

# FIG. 11

1100

FIRST ELECTRONIC
DEVICE

1150

SECOND ELECTRONIC
DEVICE

1160

TERMINATE WINDOW

1162

REQUEST TERMINATION

1164

TERMINATE APP/TASK

1166

REMOVE AND NOTIFY OF
TERMINATED CONTAINER

1168

TERMINATION EVENT AND TERMINATION CAUSE

1170

PROCESS RemoteAppContainer
TERMINATION

1172

RELEASE RELATED RESOURCES

# FIG. 12A

# FIG. 12B

# FIG. 13

```
                    ┌──────────────┐
                    │    START     │
                    └──────┬───────┘
                           │
         ┌─────────────────▼──────────────────┐  1310
         │   CALL INTENT BY APP RUNNING IN     │
         │  CALL INTENT BY AppExecutionContainer│
         └─────────────────┬──────────────────┘
                           │
         ┌─────────────────▼──────────────────┐  1315
         │      PERFORM activity resolve BY    │
         │          ActivityTaskManager        │
         └─────────────────┬──────────────────┘
                           │
         ┌─────────────────▼──────────────────┐  1320
         │    IDENTIFY REQUESTED DISPLAY AND   │
         │            DISPLAY FLAG             │
         └─────────────────┬──────────────────┘
                           │
                    ◇──────▼──────◇  1325
               virtual Display FOR    NO
              MULTI-SCREEN MIRRORING ? ──────────────────┐
                    ◇──────┬──────◇                      │
                        YES│                             │
                    ◇──────▼──────◇  1335                │
                 CHECK Intercept      NO                 │
                CONDITION MATCHING ─────────┐            │
                    ◇──────┬──────◇         │            │
                        YES│                ▼            ▼
         ┌─────────────────▼──────────────────┐  ┌──────────────────────┐ 1330
         │  CALL onStarActivityIntercepted    │  │ EXECUTE RESOLVED INTENT│
         │  CALLBACK BY ActivityTaskManager   │  └───────────┬──────────┘
         └─────────────────┬──────────────────┘ 1340          │
                           │                                  │
         ┌─────────────────▼──────────────────┐  1345         │
         │      GENERATE AppExecutionContainer  │              │
         └─────────────────┬──────────────────┘               │
                           │                                  │
         ┌─────────────────▼──────────────────┐  1350         │
         │       CONFIGURE INTERCEPTED         │               │
         │        INTENT FOR CONTAINER         │               │
         └─────────────────┬──────────────────┘               │
                           │                                  │
         ┌─────────────────▼──────────────────┐  1355         │
         │      EXECUTE AppExecutionContainer   │              │
         └─────────────────┬──────────────────┘               │
                           │◄─────────────────────────────────┘
                    ┌──────▼───────┐
                    │     END      │
                    └──────────────┘
```

FIG. 14A

# FIG. 14B

1400

1420

Warning

You are about to launch app Calendar which is already running on remote. You need to close the app on remote before launching it here. Continue? You app data may be lost after it`s closed

Yes

No

# FIG. 15

START

GENERATE NEW App Execution Container — 1510

EXECUTE APP OR INTERCEPTED INTENT IN CONTAINER — 1515

CHECK OnStartActivity intercepted CONDITION — 1520

CONDITION NOT SATISFIED

CONDITION SATISFIED

CALL OnStartActivityintercepted CALLBACK — 1525

IDENTIFY POSITION OF RUNNING APP — 1530

Virtual Display

Main Display

BRING RUNNING APP TO FOREGROUND — 1535

DISPLAY USER DETERMINATION DIALOGUE — 1545

TERMINATE NEWLY GENERATED AppExecutionContainer — 1540

NO

USER ALLOWED TO MOVE APP? — 1550

YES

TERMINATE APP RUNNING IN MAIN DISPLAY — 1555

EXECUTE INTERCEPTED INTENT IN NEW VD — 1560

EXECUTE APP — 1565

CALL OnTaskPlayed CALLBACK — 1570

IDENTIFY NUMBER OF RUNNING CONTAINERS — 1575

Cnt < N

Cnt > N

EXTRACT CONTAINER TO BE TERMINATED — 1580

TERMINATE SELECTED TECONTAINER — 1585

END

FIG. 16

```
                    ┌──────────────┐
                    │    START     │
                    └──────┬───────┘
                           │              1610
                    ┌──────▼───────┐
                    │ TASK IS TERMINATED │
                    └──────┬───────┘
                           │              1615
                    ┌──────▼───────────┐
                    │ GENERATE onTaskRemoved │
                    │ CALLBACK IN TaskWatcher │
                    └──────┬───────────┘
                           │              1620
                    ┌──────▼─────────────────┐
                    │ IDENTIFY AppExecutionContainer VIA │
                    │ TaskId UPON RECEPTION OF │
                    │ onTaskRemoved │
                    └──────┬─────────────────┘
                           │              1625
                    ┌──────▼─────────────────┐
                    │ CHECK WHETHER NEW TASK │
                    │ HAS LAUNCHED AND EXECUTED TIME │
                    │ IN AppExecutionContainer │
                    └──────┬─────────────────┘
                           │
                     1630  │
                  ◇────────▼────────◇  NO
                  │ TASK EXECUTION TIME < │──────────┐
                  │   REFERENCE TIME   │             │
                  ◇────────┬────────◇             │
                       YES │                         │
```

1630

TASK EXECUTION TIME < REFERENCE TIME — NO

YES

| 1635 RECORD CAUSE OF TERMINATION IN AppExecutionContainer (TERMINATION AFTER LAUNCHING NEW TASK) | 1645 RECORD CAUSE OF TERMINATION IN AppExecutionContainer (APP TERMINATION) |

1640 REMOVE CONTAINER BY AppExecutionContainerManager

END

## INTERNATIONAL SEARCH REPORT

| International application No. |
| --- |
| **PCT/KR2021/010263** |

| A. | CLASSIFICATION OF SUBJECT MATTER |
| --- | --- |

**H04N 21/436**(2011.01)i; **H04N 21/4363**(2011.01)i; **H04N 21/414**(2011.01)i; **H04N 21/4402**(2011.01)i; **H04N 21/443**(2011.01)i

According to International Patent Classification (IPC) or to both national classification and IPC

| B. | FIELDS SEARCHED |
| --- | --- |

Minimum documentation searched (classification system followed by classification symbols)

H04N 21/436(2011.01); G06F 13/14(2006.01); G06F 3/0481(2013.01); G06F 3/14(2006.01); G06F 8/61(2018.01); H04B 1/40(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 미러링(mirroring), 어플리케이션(application), 멀티 태스크(multi-task), 화면 (screen)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | KR 10-1952682 B1 (LG ELECTRONICS INC.) 27 February 2019 (2019-02-27)<br>   See paragraphs [0020]-[0021], [0102]-[0109] and [0116]-[0119]; and figures 1 and 5-6c. | 1-15 |
| Y | KR 10-2088384 B1 (SAMSUNG ELECTRONICS CO., LTD.) 28 May 2020 (2020-05-28)<br>   See paragraphs [0118]-[0122]; and figure 4. | 1-15 |
| A | KR 10-1919788 B1 (LG ELECTRONICS INC.) 19 November 2018 (2018-11-19)<br>   See paragraphs [0099]-[0108]; and figure 5. | 1-15 |
| A | KR 10-2018-0099352 A (SAMSUNG ELECTRONICS CO., LTD.) 05 September 2018 (2018-09-05)<br>   See claims 1-14. | 1-15 |
| A | KR 10-2020-0014003 A (SAMSUNG ELECTRONICS CO., LTD.) 10 February 2020 (2020-02-10)<br>   See claims 1-10. | 1-15 |

☐ Further documents are listed in the continuation of Box C.   ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **22 November 2021** | **22 November 2021** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

# EP 4 178 214 A1

<div align="center">

**INTERNATIONAL SEARCH REPORT**
**Information on patent family members**

</div>

International application No.

**PCT/KR2021/010263**

| Patent document cited in search report | | | Publication date (day/month/year) | Patent family member(s) | | | Publication date (day/month/year) |
|---|---|---|---|---|---|---|---|
| KR | 10-1952682 | B1 | 27 February 2019 | CN | 103379221 | A | 30 October 2013 |
| | | | | CN | 103379221 | B | 31 August 2016 |
| | | | | EP | 2658228 | A1 | 30 October 2013 |
| | | | | EP | 2658228 | B1 | 06 June 2018 |
| | | | | KR | 10-2013-0119172 | A | 31 October 2013 |
| | | | | US | 2013-0278484 | A1 | 24 October 2013 |
| KR | 10-2088384 | B1 | 28 May 2020 | KR | 10-2015-0028383 | A | 16 March 2015 |
| | | | | US | 2015-0067549 | A1 | 05 March 2015 |
| | | | | US | 9626147 | B2 | 18 April 2017 |
| KR | 10-1919788 | B1 | 19 November 2018 | CN | 103458102 | A | 18 December 2013 |
| | | | | CN | 103458102 | B | 01 March 2017 |
| | | | | EP | 2669788 | A1 | 04 December 2013 |
| | | | | KR | 10-2013-0134603 | A | 10 December 2013 |
| | | | | US | 2013-0326397 | A1 | 05 December 2013 |
| KR | 10-2018-0099352 | A | 05 September 2018 | EP | 3367225 | A1 | 29 August 2018 |
| | | | | EP | 3367225 | B1 | 26 February 2020 |
| | | | | EP | 3678011 | A1 | 08 July 2020 |
| | | | | KR | 10-2303420 | B1 | 23 September 2021 |
| | | | | US | 11086494 | B2 | 10 August 2021 |
| | | | | US | 2018-0246634 | A1 | 30 August 2018 |
| KR | 10-2020-0014003 | A | 10 February 2020 | CN | 112513803 | A | 16 March 2021 |
| | | | | EP | 3803564 | A1 | 14 April 2021 |
| | | | | US | 10929085 | B2 | 23 February 2021 |
| | | | | US | 2020-0042268 | A1 | 06 February 2020 |
| | | | | WO | 2020-027562 | A1 | 06 February 2020 |

Form PCT/ISA/210 (patent family annex) (July 2019)